# EUROPÄISCHE PATENTSCHRIFT

(11) **EP 0 686 674 B1**
(45) Veröffentlichungstag und Bekanntmachung des Hinweises auf die Patenterteilung: **28.01.1998**
(21) Anmeldenummer: 95106759.4
(22) Anmeldetag: 04.05.1995
(51) Int. Cl.: C09B 67/48, C09K 19/40, C09K 19/52, C09D 7/12

(54) **Interferenzpigmente aus in cholesterischer Anordnung fixierten Molekülen sowie deren Verwendung**
Interference pigments from molecules fixed in a cholesteric arrangement and their use
Pigments d'interférence formés par des molécules fixés dans un arrangement cholestérique et leur utilisation

(30) Priorität: 06.05.1994 DE 4416191
(43) Veröffentlichungstag der Anmeldung: 13.12.1995
(73) Patentinhaber: Consortium für elektrochemische Industrie GmbH, D-81379 München (DE)
(72) Erfinder: Müller-Rees, Christoph, Dr., D-82049 Pullach (DE); Doppelberger, Johann, Dr., D-84547 Emmerting (DE); Jung, Silvia, D-80538 München (DE); Goeblmeier, Walter, D-84329 Rogglfing (DE)
(74) Vertreter: Potten, Holger

(56) Entgegenhaltungen:
- EP-A- 0 060 335
- EP-A- 0 358 208
- EP-A- 0 383 376
- EP-A- 0 601 483
- FR-A- 2 133 897
- US-A- 5 364 557

## Beschreibung

Die Erfindung betrifft Interferenzpigmente aus in cholesterischer Anordnung fixierten Molekülen sowie deren Verwendung.

Neben den schon lange weit verbreiteten farbigen Pigmenten, die einen Teil des einfallenden Lichtes absorbieren und den Rest reflektieren, sind heute in zunehmendem Maße Pigmente im Einsatz, die ihre Farbigkeit Interferenzeffekten verdanken. In der Regel sind diese Pigmente als Perlglanzpigmente bekannt und bestehen aus Glimmerplättchen, auf die dünne Schichten von Materialien unterschiedlicher optischer Dichte aufgebracht sind. Um im sichtbaren Wellenlängenbereich Farbeffekte erzeugen zu können, sind Schichtdicken im Bereich weniger hundert Nanometer erforderlich, die zudem von Schicht zu Schicht exakt abgestimmt sein müssen.

In "Merck Kontakte 1992 (2), S. 23" beispielsweise wird anhand von Modellrechnungen gezeigt, wie sich ein ursprünglich scharf definiertes Reflexionsspektrum eines TiO₂-Mica-TiO₂- Systems über den gesamten sichtbaren Wellenlängenbereich "verschmiert", wenn anstelle exakt definierter Schichtdicken des Glimmersubstrates eine Lorenzverteilung dieser Schichtdicken anzutreffen ist. In derselben Publikation (Abb. 10, Seite 20) werden Reflexionskurven des Systems bei unterschiedlichen Schichtdicken der TiO₂- Schicht dargestellt: Man erkennt deutlich den markanten Einfluß der Schichtdicken auf die Kurvenform (Intensität und Breite der Kurven) und die Lage im Lichtspektrum, was unterschiedlichste Farberscheinungen zur Folge hat. In derselben Publikation (Abb. 11, Seite 20) ist der Verlauf der Reflexionskurven eines ausgewählten TiO₂-Mica-TiO₂-Systems bei verschiedenen Betrachtungswinkeln (Beleuchtungswinkel entspricht Betrachtungswinkel) zu erkennen: Bedingt durch die bei Interferenzerscheinungen mit Licht auftretenden Brechungsgesetze verschieben sich die Kurven mit flacherem Betrachtungswinkel zu kürzerwelligen Bereichen des Spektrums, wobei jedoch alle Reflexionskurven in erheblichen Anteilen überlappen. Ebenso müssen in diesen Modellrechnungen Interferenzkurven höherer Ordnung berücksichtigt werden, so daß zu einem gegebenem Schichtsystem mehrere Reflexionsmaxima gehören, die im sichtbaren Bereich liegen können und additiv zum Gesamtfarbeindruck beitragen. Aus diesen Gründen ist ein derartiges Schichtsystem nicht ideal farblos, sondern milchig-weiß, wobei auch bei unterschiedlichen Betrachtungswinkeln (Beleuchtungswinkel entspricht Betrachtungswinkel, "Glanz- oder Reflexionsbedingung") infolge der Überlappungen der breiten Reflexionskurven keine deutliche Farbänderung zu beobachten ist. Wird hingegen unter einem vom Beleuchtungswinkel stark abweichenden Winkel betrachtet (Winkelbereich weit außerhalb der "Glanzbedingung"), so ist in dieser Geometrie ("in Transmission") der Komplementäranteil des Lichtspektrums zu sehen.

Werden mehrere Schichten mit Materialien unterschiedlicher Brechungsindices auf ein Substrat aufgetragen, so lassen sich höhere Reflexionsintensitäten mit Kurven geringerer Breite erzielen, wie aus Abb. 15 (Seite 21 obiger Publikation) dargestellt wird. Jedoch tritt auch bei diesem Beispiel nur ein kleiner Bereich des roten Lichtspektrums um 610 nm bis 650 nm ohne Reflexionsanteile im Reflexionsspektrum auf.

All diesen Modellrechnungen ist gemeinsam, daß von definierten Schichtdicken, die sich über das gesamte Pigment homogen erstrecken, ausgegangen wird. In Produktionsprozessen setzt dies somit genau einzuhaltende Bedingungen voraus.

In EP-A-0 342 533 werden beispielsweise derartige Interferenzpigmente hergestellt, indem auf Naturglimmerblättchen Metalloxidschichten aufgetragen werden, wobei die Glimmerblättchen in eine wässrige Lösung aus Metallverbindungen eingetaucht und anschließend bei Temperaturen von 80°C bis 130°C getrocknet werden.

Hingegen wird in DE-A-42 17 511 ein Verfahren in der Gasphase beschrieben, bei dem in einem Wirbelschichtreaktor Metallverbindungen aufgedampft werden. In beiden Fällen unterliegen die einzelnen Schichten jedoch Dickenschwankungen, die zu den diskutierten farblichen Schwankungen führen.

In WO 93 / 08237 wird der bei Naturglimmer unvermeidlichen Dickenschwankung durch ein Verfahren begegnet, das zu besser definierten SiO₂-Schichten führt, indem als Precursormaterial ein dünner Wasserglasfilm gebildet und anschließend getrocknet wird.
Nachteilig ist jedoch auch bei diesem Verfahren die nachfolgend erforderliche Beschichtung dieses Trägersubstrates mit Verbindungen genau einzuhaltender Schichtdicken auf naßchemischem Wege oder durch Verfahren, wie es beispielsweise in der bereits diskutierten EP-A-0 342 533 beschrieben erfolgt. Somit ist auch in diesem Beispiel ein exakt definiertes Schichtdickenverhältnis von Träger- und Metall(oxid)schicht(en) nicht immer zu bewerkstelligen. Desweiteren sind die bei der Herstellung von herkömmlichen Interferenzpigmenten in der Precursorstufe benötigten Metallverbindungen häufig toxisch und unter dem Aspekt der Arbeitsplatzsicherheit problematisch.

Wie aus "H.-J. Eberle, A. Miller und F.-H. Kreuzer, Liquid Crystals, 1989 (5), 907-916" bekannt ist, lassen sich mit flüssigkristallinen Materialien, deren Moleküle in gegeneinander verdrillten Schichten (cholesterische Flüssigkristalle mit Helixstruktur) angeordnet sind, neuartige Farbeffekte realisieren: Bedingt durch Interferenzeffekte mit Licht wird ein sehr schmaler Bereich des in einem breiten Spektralbereich einfallenden Lichtstrahls reflektiert, während alle Wellenlängen außerhalb dieses Bereiches transmittiert werden. Der Bereich des reflektierten Spektralanteils wird dabei durch die Ganghöhe der Helix und den mittleren Brechungsindex des Materials vorgegeben. Die Halbwertsbreite der Reflexionskurve ist von der molekularen Brechungsindexanisotropie abhängig. Zusätzlich wird der reflektierte Spektralbereich in einen links- und einen rechtshelikal-polarisierten Lichtanteil aufgeteilt, wobei je nach Drehsinn der Helix der eine Teil reflektiert und der andere transmittiert wird.

Wie schon für Interferenzpigmente erläutert wurde, verschiebt sich bei cholesterischen Flüssigkristallen in Analogie zum Bragg'schen Gesetz die Lage des Reflexionsspektrums zum kurzwelligen Bereich, wenn man flacher beleuchtet und beobachtet. Im Gegensatz zu den beschriebenen Interferenzpigmenten sind bei cholesterischen Flüssigkristallen auf Basis von Organopolysiloxanen, die, wie in "Eberle et al." dargestellt, als Film auf Trägermaterialien aufgetragen wurden, Reflexionskurven hoher Intensität mit schmalen Halbwertsbreiten zu erzielen. Dabei fehlen in weiten Spektralbereichen - gerade auch im sichtbaren - Reflexionsanteile, so daß außerhalb der Reflexionskurven der Flüssigkristalle eine Grundlinie ohne Reflexionsanteile vorherrscht. Da selbst im Reflexionsbereich lediglich die linkshelikal polarisierten Lichtanteile reflektiert, die rechtshelikal polarisierten Anteile ebenso wie der Rest des Lichtspektrums vollständig transmittiert werden, sind diese cholesterischen Materialien über den gesamten Spektralbereich transparent.

Bedingt durch die schmalen Halbwertsbreiten der Reflexionskurven ist bei derartigen Systemen eine hohe Brillanz und eine gute Farbsättigung zu erzielen, die gerade auch bei ungünstigen Lichtverhältnissen infolge der sich deutlich vom Untergrund abhebenden Reflexionskurven zur Geltung kommen. Da sich diese Kurven bei unterschiedlichen Betrachtungwinkeln unter Glanzwinkelbedingungen nicht oder nur zu geringen Anteilen überlappen (Abb. 5a in "Eberle et al."), werden schon bei kleineren Winkelveränderungen andere Spektralbereiche von der Reflexionskurve überlappt, ohne daß die ursprünglichen Bereiche noch beteiligt sind; die "neue" Reflexionskurve befindet sich bereits auf der Grundlinie in demjenigen Spektralbereich, bei dem die "alte" Reflexionskurve ihr Wellenlängenmaximum hatte. Dies führt zu einer deutlichen, kontinuierlich mit dem Betrachtungswinkel veränderbaren Farbempfindung ("kontinuierlicher Farbflop") und unterscheidet sich fundamental vom schon diskutierten Farbflop herkömmlicher Interferenzpigmente auf Basis der Reflexions-/Transmissionsbedingung.

Werden die cholesterischen Organosiloxane auf farbige Untergründe aufgetragen, so lassen sich vielfältigste Farbeffekte erzielen: Während ein schwarzer Untergrund den von den cholesterisch angeordneten Molekülen transmittierten Lichtanteil vollständig absorbiert, ist mit einem weißen Untergrund ein gegenläufiger Effekt zu beobachten: Mit dem gerichteten Spektralanteil der cholesterischen Phase konkurriert der spektral und räumlich diffuse Lichtanteil des weißen Untergrundes. Bei Verwendung von farbigen Untergründen überlagern sich demnach die Absorptionsspektren mit den Reflexionsspektren der Helixstrukturen, was zu winkelabhängigen Blau- und sogar gegenläufigen ("inversen") Rotverschiebungen bei flacheren Betrachtungswinkeln führen kann, wie in "Eberle et al" an verschiedenen Beispielen in Abb. 9 gezeigt wurde. So ist es beispielsweise möglich, mit rotem flüssigkristallinen Material auf dunkelblauem Untergrund eine zu einem grünen Untergrund gegenläufige winkelabhängige Farbverschiebung zu erzielen. Bei nahezu senkrechtem Beleuchtungs-/Beobachtungswinkel führt dies auf blauem Untergrund zu einem violetten, auf grünem Untergrund zu einem orangefarbenem Signal. Bei flacheren Beleuchtungs-/Beobachtungswinkeln hingegen verschiebt sich auf grünem Untergrund der Farbeindruck zum grünen Bereich, was einer Verschiebung in den kurzwelligen Spektralbereich entspricht. Auf dem blauen Untergrund wird ein türkisfarbener Ton gebildet, der sich aus dem blauen Absorptionsfarbton und dem grünen Farbton des flüssigkristallinen Materials bildet, was gegenüber dem Violettfarbton einer Verschiebung in den langwelligen Spektralbereich entspricht. Bei Verwendung von roten Flüssigkristallmaterialien auf rotem Untergrund tritt eine Farbintensivierung unter bestimmten nahezu senkrechten Betrachtungswinkeln auf, während bei flacheren Winkeln der Farbflop des Flüssigkristalls zu einer grünen Farberscheinung führt, die den winkelunabhängigen Absorptionsrotton der Unterlage überlagert und somit einen orangenen Farbeindruck vermittelt.

Da sich die Reflexionskurven der flüssigkristallinen Organosiloxane in weiten Bereichen des sichtbaren Lichtspektrums auf der Grundlinie befinden, sind diese Bereiche für andere farbgebende Medien (Pigmente, Farbmittel) "frei", so daß die vielfältigsten Kombinationen möglich sind, die zu immer neuartigen Farbeffekten und Flopintensitäten führen können. Es spielt dabei keine Rolle, ob zusätzlich Pigmente in die flüssigkristalline Masse eingearbeitet sind oder ob ein farbiger Untergrund gewählt wird, wie beim gelben cholesterischen Organosiloxanmaterial in Abb. 9 ("Eberle et al.") exemplarisch gezeigt wird.

All diesen Anwendungen ist gemeinsam, daß der bei den cholesterischen Organosiloxanen beobachtbare Farbeffekt nur in Temperaturbereichen möglich ist, in denen die Moleküle sich in helikalen Schichten anordnen. Dieser Temperaturbereich ist durch das Material vorgegeben. Wird das Material bei Temperaturen erhitzt, die oberhalb dieses Phasenbereiches liegen, so geht die geordnete Struktur in eine ungeordnete über, so daß die beschriebenen konstruktiven Interferenzeffekte mit Licht nicht mehr möglich sind, das ursprünglich farbige Material wird farblos.

In US-A-5 211 877 werden Materialien beschrieben, die auch außerhalb des flüssigkristallinen Phasenbereiches die charakteristischen optischen Eigenschaften beibehalten: Nach Ausbildung helikal verdrillter Schichten werden diese Moleküle mit Hilfe einer chemischen Polymerisationsreaktion fixiert, so daß diese Schichten auch in Temperaturbereichen außerhalb der flüssigkristallinen Phase erhalten bleiben. Allerdings benötigt man bei dieser Methode eine planare Unterlage, auf der sich die Basisschicht für die helikale Struktur ausbilden kann; somit sind nur planare Flächen mit derartigen Farbeffekten auszustatten.

Aus EP-A 0 601 483, einer europäischen Anmeldung, die nach Art. 54(3) EPÜ relevant ist, sind Pigmente mit vom Betrachtungswinkel abhängiger Farbigkeit bekannt, die aus orientiert dreidimensional vernetzten Substanzen flüssigkristalliner Struktur mit chiraler Phase sowie ggf. weiteren Farbstoffen und Pigmenten bestehen.

Aufgabe der Erfindung war es, Materialien, die mit dem Betrachtungswinkel kontinuierlich verändernde, brillante Farbeindrücke, gegebenfalls auch im UV- und IR-Bereich, vermitteln, die mit gängigen Applikationsmethoden universell verwendet werden können, bereit zu stellen.

Die Erfindung betrifft Pigmente plättchenförmiger Struktur mit einer Dicke von 3 µm bis 10 µm und einer Korngröße mit einem Durchmesser von zwischen 500 µm und 5 µm enthaltend orientierte vernetzte Substanzen mit flüssigkristalliner Struktur mit einer chiralen Phase.

Die erfindungsgemäßen Pigmente besitzen die optischen Eigenschaften der flüssigkristallinen Phase (winkelabhängiger, kontinuierlich verändernder Farbeffekt, hohe Brillanz sowie Polarisation des reflektierten Lichtanteils). Sie können eingearbeitet in übliche Bindemittelsysteme auf beliebige Flächen aufgebracht werden. Auch nicht-planare Flächen können dabei als Unterlage dienen.

Pigmente enthaltend orientierte dreidimensional vernetzte Substanzen mit flüssigkristalliner Struktur mit einer chiralen Phase, können mit konventionellen etablierten Verfahrensschritten einzeln oder in beliebigen Mischungen in verschiedenste Medien eingearbeitet werden.

Beispiele für solche Medien sind Wasserlacke, beispielsweise in Form von wässrigen Dispersionen wie PMA, SA, Polyvinyl-Derivate, PVC, Polyvinylidenchlorid, SB-Copo, PV-AC-Copo-Harze, oder in Form von wasserlöslichen Bindemitteln wie Schellack, Maleinharze, Kolophonium modifizierte Phenolharze, lineare und verzweigte gesättigte Polyester, aminoplastvernetzende gesättigte Polyester, Fettsäure mod. Alkydharze, plastifizierte Harnstoffharze oder in Form von wasserverdünnbaren Bindemitteln wie PUR-Dispersionen, EP-Harze, Harnstoffharze, Melaminharze, Phenolharze, Alkydharze, Alkydharzemulsionen, Siliconharzemulsionen, desweiteren Pulverlacke, beispielsweise Pulverlacke für TRIBO/ES wie Polyester-Beschichtungspulverharze, PUR-Beschichtungspulverharze, EP-Beschichtungspulverharze, EP/SP-Hybrid-Beschichtungspulverharze, PMA-Beschichtungspulverharze oder Pulverlacke für Wirbelsintern, wie thermoplastifiziertes EPS, LD-PE, LLD-PE, HD-PE, desweiteren lösemittelhaltige Lacke, beispielsweise als Ein- und Zweikomponenten-Lacke (Bindemittel), wie Schellack, Kolophonium-Harzester, Maleinatharze, Nitrocellulosen, kolophoniummodifizierte Phenolharze, physikalisch trocknende gesättigte Polyester, Aminoplast vernetzende gesättigte Polyester, Isocyanat vernetzende gesättigte Polyester, selbstvernetzende gesättigte Polyester, Alkyde mit gesättigten Fettsäuren, Leinölalkydharze, Sojaölharze, Sonnenblumenölalkydharze, Safflorölalkydharze, Ricinenalkydharze, Holzöl-/Leinölalkydharze, Mischölalkydharze, Harzmodifizierte Alkydharze, Styrol/Vinyltoluolmodifizierte Alkydharze, Acrylierte Alkydharze, Urethanmodifizierte Alkydharze, siliconmodifizierte Alkydharze, epoxidmodifizierte Alkydharze, Isophthalsäure-Alkydharze, nichtplastifizierte Harnstoffharze, plastifizierte Harnstoffharze, Melaminharze, Polyvinylacetale, nichtvernetzende P(M)A-Homo- bzw. Copolymerisate, nichtvernetzende P(M)A-Homo- bzw. Copolymerisate mit Nichtacrylmonomeren, selbstvernetzende P(M)A-Homo- bzw. Copolymerisate, P(M)A Copolymerisate mit anderen Nichtacrylmonomeren, fremdvernetzende P(M)A-Homo- bzw. Copolymerisate, fremdvernetzende P(M)A-Copolymerisate mit Nichtacrylmonomeren, Acrylat-Copolymerisationsharze, Ungesättigte Kohlenwasserstoffharze, organisch lösliche Celluloseverbindungen, Silicon-Kombiharze, PUR-Harze, P-Harze, peroxidhärtende ungesättigte Kunstharze, strahlenhärtende Kunstharze photoinitiatorhaltig, strahlenhärtende Kunstharze photoinitiatorfrei, desweiteren lösemittelfreie Lacke (Bindemittel), wie Isocyanat vernetzende gesättigte Polyester, PUR-2K-Harzsysteme, PUR-lK-Harzsysteme feuchtigkeitshärtend, EP-Harze sowie Kunststoffe - einzeln oder in Kombination - wie Acrylnitril-Butadien-Styrol-Copolymere, Celluloseacetat, Celluloseacetobutyrat, Celluloseacetopropionat, Cellulosenitrat, Cellulosepropionat, Kunsthorn, Epoxidharze, Polyamid, Polycarbonat, Polyethylen, Polybutylenterephthalat, Polyethylenterephthalat, Polymethylmethacrylat, Polypropylen, Polystyrol, Polytetrafluorethylen, Polyvinylchlorid, Polyvinylidenchlorid, Polyurethan, Styrol-Acrylnitril-Copolymere, ungesättigte Polyesterharze als Granulate, Pulver, oder Gießharz.

Durch die Pigmente enthaltend orientierte dreidimensional vernetzte Substanzen mit flüssigkristalliner Struktur mit einer chiralen Phase sind die oben im Beispiel der Organosiloxane diskutierten herausragenden optischen Eigenschaften mit gängigen, dem Fachmann leicht zugänglichen Verfahren erstmals in zahllosen Anwendungen zu verwirklichen. Die beschriebenen Effekte werden dabei gewissermaßen mosaikartig mit jedem einzelnen Pigment im Bindemittelsystem wieder zusammengesetzt.

Durch Kombination dieser Pigmente untereinander bzw. mit konventionellen farbgebenden Pigmenten lassen sich auf beliebigen Flächen verschiedenste Farbeffekte erzielen, wobei sich - bedingt durch den vollständig transparenten Charakter der Flüssigkristallpigmente in weiten Bereichen des Lichtspektrums - zusätzlich eine Tiefenwirkung des Glanzes erzielen läßt, der alle bisher realisierten Wirkungen übertrifft.

Bedingt durch die im Vergleich zu anorganischen Pigmenten geringe Dichte haben die erfindungsgemäßen Pigmente eine geringere Tendenz zum Absetzen und Entmischen in zahlreichen Bindemittelsystemen.

Die Erfindung betrifft daher auch Zusammensetzungen, die Pigmente enthaltend orientierte dreidimensional vernetzte Substanzen mit flüssigkristalliner Struktur mit einer chiralen Phase umfassen.

Als Ausgangssubstanzen für die Herstellung der erfindungsgemäßen Pigmente sind flüssigkristalline Substanzen geeignet, die eine verdrillte Struktur besitzen mit einer Ganghöhe, die der Wellenlänge des Lichtes im Bereich von UV bis IR entspricht. Flüssigkristalline Substanzen mit chiraler Phase, die eine verdrillte Struktur mit einer gewünschten Ganghöhe besitzen, können aus nematischen, smektischen oder diskotischen Strukturen erhalten werden, indem man ihnen eine chirale Substanz zusetzt. Art und Anteil der chiralen Substanz bestimmen die Ganghöhe der verdrillten Struktur und damit die Wellenlänge des reflektierten Lichtes. Die Verdrillung der Struktur kann sowohl links- als auch rechtshändig sein. Die Ausgangssubstanzen müssen zudem polymerisierbare, polykondensierbare oder einer Polyaddition zugängliche Gruppen, von denen zumindest ein Teil in Form di-, tri- oder höherfunktioneller Bausteine vorliegt, enthalten. Beispiele für derartige Systeme sind Methacryloxy- und Acryloxygruppen.

Geeignete Materialien und ihre Herstellung sind beispielsweise in DE-C2-3,604,757, in EP-A2-358,208, in EP-A-0 066 137 (entspricht US 4,388,453) oder in der in D.J. Broer et al in 14. Int. Liquid Conf., Abstracts II, 921 (1992) genannten Literatur beschrieben.

Bevorzugt geeignet sind dreidimensional vernetzbare Polyorganosiloxane nach EP-A-358,208.

Als Ausgangssubstanzen zur Herstellung der erfindungsgemäßen Pigmente können jedoch grundsätzlich alle cholesterischen Flüssigkristalle dienen. Es kann eine Art von cholesterischem Flüssigkristall, es kann aber auch ein Gemisch aus mindestens zwei dieser Flüssigkristalle eingesetzt werden; es kann ein Farbstoff, es können auch Gemische aus mindestens zwei Farbstoffen eingesetzt werden.

Der einzusetzende Farbstoff ist in einer bevorzugten Ausführungsform ein Pigment.

Der im erfindungsgemäßen Verfahren einzusetzende Farbstoff ist in einer weiteren bevorzugten Ausführungsform im eingesetzten Flüssigkristall(gemisch) löslich. Vorzugsweise wird kein Gemisch von mehreren cholesterischen flüssigkristallinen Substanzen, sondern eine einzelne reine cholesterische flüssigkristalline Substanz im erfindungsgemäßen Verfahren eingesetzt.

Das Zumischen der Pigmente und/oder Farbstoffe zu den übrigen Ausgangssubstanzen erfolgt in üblicher Art und Weise beispielsweise durch Einrühren. Das Zumischen der Farbstoffe und/oder Pigmente bewirkt im erfindungsgemäßen Pigment eine Kombination der winkelabhängigen Farbeffekte der flüssigkristallinen Substanzen mit dem oder den bekannten Farbeffekten der jeweiligen zugemischten Stoffe. Das Zumischen dieser Stoffe ändert jedoch nichts an den weiteren Verfahrensschritten zur Herstellung der erfindungsgemäßen Pigmente.

Eine jeweils gewünschte Pigmentfarbe kann auch dadurch erhalten werden, daß definierte Flüssigkristall-Grundmischungen in geeigneten Mengenverhältnissen gemischt werden. Auch in diesem Falle ändern sich die weiteren Verfahrensschritte zur Herstellung der erfindungsgemäßen Pigmente nicht. Die weitere Beschreibung des Herstellungsverfahrens gilt daher für alle Varianten der erfindungsmäßen Pigmente.

Substanzen mit flüssigkristalliner Struktur mit verdrillten Phasen bilden ihre optischen Eigenschaften erst dann aus, wenn die einzelnen Moleküle in Schichten angeordnet sind und innerhalb einer Schicht einheitlich geordnet sind. Die Moleküle ändern dabei von Schicht zu Schicht ihre Vorzugsrichtung, so daß schraubenförmige Strukturen entstehen. Um dies zu erreichen, werden die Moleküle mittels bekannter Methoden wie beispielsweise durch Orientierungsschichten oder elektrische oder magnetische Felder orientiert. Solche Methoden sind beispielsweise aus den folgenden Literaturstellen bekannt: CA113 (22), 201523y; CA113 (14), 124523u; CA112 (18), 169216s; CA112 (16), 149138q; CA112 (4), 21552c; CA111 (16), 144258y; CA111 (4), 24780r.

Bei der Herstellung der erfindungsgemäßen Pigmente werden die genannten Ausgangssubstanzen in bekannter Weise orientiert. Dies kann beispielsweise durch Aufrakeln auf eine Metall-, Kunststoff- oder Glasunterlage geschehen. Diese Unterlage kann gegebenenfalls mit einer Orientierungsschicht z.B. aus Polyimid oder Polyvinylalkohol versehen sein. Sie kann zu diesem Zweck auch silanisiert sein. Es ist jedoch ebenso möglich, die Ausgangssubstanz zwischen zwei Folien zu scheren. Bevorzugt werden eine oder zwei Polyethylenterephthalat Folien verwendet. Die Orientierung der cholesterischen flüssigkristallinen Moleküle mittels zwei Folien führt zu einer besseren Orientierung der Moleküle und damit letztendlich zu Pigmenten mit verbessertem Farbeffekt.

Das Aufrakeln flüssigkristalliner Polyorganosiloxane auf eine Folie ist beispielsweise aus EP-A-358,208 bekannt.

Die Vernetzung der orientierten flüssigkristallinen Substanzen erfolgt, wie für das jeweilige Material aus dem Stand der Technik bekannt. So können beispielsweise flüssigkristalline Polyorganosiloxane nach dem in der EP-A-66 137 beschriebenen Verfahren thermisch vernetzt werden. Die in der EP-A-358 208 beschriebenen flüssigkristallinen Polyorganosiloxane lassen sich photochemisch beispielsweise durch Bestrahlen mit UV-Licht dreidimensional vernetzen.

Einen Überblick über Verfahren, orientierte Ausgangsstoffe photochemisch zu vernetzen, findet sich bei C.G. Roffey, Photopolymerisation of Surface Coatings, (1982) John Wiley & Sons, Chichester, S. 137-208.

Die vernetzten orientierten flüssigkristallinen Substanzen mit chiraler Phase werden gegebenenfalls von der Unterlage abgelöst. Bei Verwendung einer Folie als Unterlage kann die mechanische Abtrennung der spröden vernetzten Flüssigkristalle von der Unterlage z.B. dadurch erfolgen, daß die Unterlage über eine Umlenkrolle mit kleinem Durchmesser geführt wird. Dadurch blättert das vernetzte Material von der Folie ab. Jede andere Methode, mit der sich das polymerisierte Material von der Unterlage entfernen läßt, ist jedoch ebenso geeignet.

Das orientierte dreidimensional vernetzte trägerlose flüssigkristalline Material wird auf eine jeweils erwünschte Korngröße zerkleinert. Dies kann z. B. durch Mahlen beispielsweise in Universalmühlen oder Walzen in Walzwerken erfolgen. Je nach der erwünschten Anwendung der Pigmente können Korngrößen mit einem Durchmesser von etwa 10 mm bis zu 1 µm hergestellt werden.

Im allgemeinen haben die Pigmente eine Korngrösse zwischen 500 µm und 5 µm. Die Dicke beträgt 3 µm bis 10 µm.

Die wirksame Farberscheinung ist bei Pigmenten mit einer Dicke unterhalb von 1 µm abgeschwächt, während oberhalb einer Dicke von 20 µm sich die homogene Ausrichtung der Moleküle zu cholesterischen Schichten vermindert.

Das Mahlgut kann anschließend zur Verengung der Korngrößenverteilung beispielsweise durch einen Siebprozeß klassiert werden. Pigmente, deren Dicke sich nicht von dem Plättchendurchmesser unterscheidet, richten sich in den Bindemittelsystemen oder Kunststoffen nicht gleichmäßig parallel zur Oberfläche aus, so daß die in den Pigmenten enthaltenen cholesterischen Molekülschichten im Raum statistisch verteilt ausgerichtet sind. Das hat eine Abschwächung des winkelabhängigen Farbflops zur Folge. Pigmente mit einem sehr großen Plättchendurchmesser können zu einer Unebenheit des applizierten Bindemittelsystems führen, was zu einer Glanzverminderung führt.

Deshalb sind insbesondere plättchenförmige Pigmente mit einer Schichtdicke von 3 bis 10 µm und einem Plättchendurchmesser von 10 bis 100 µm für die genannten Anwendungen auf Grund ihrer guten Verarbeitbarkeit besonders geeignet.

Durch geeignetes Mischen eines Organopolysiloxans mit zwei monomeren Substanzen zu Farbabmischungen sind Precursormaterialien für Pigmente des gesamten sichtbaren Spektralbereiches zugänglich, wobei lediglich die Anteile der zugegebenen Monomerensubstanzen variieren. Somit können Pigmente hergestellt werden, die einen sehr breiten Spektralbereich abdecken, sich gleichzeitig aber in ihren chemischen und physikalischen Eigenschaften nur marginal unterscheiden.

Für diese Pigmentklasse sind somit einheitliche Testverfahren für die jeweils erwünschte Anwendung möglich, was zu einer erheblichen Aufwandsersparnis beipielsweise in der Autoserienlackapplikation führt.

Als weiterer Vorteil ist die vollsynthetische Herstellung dieser Precursormaterialien anzusehen, da keine Qualitätsschwankungen auftreten, wie sie beispielsweise bei Naturglimmerplättchen aus verschiedenen Abbaustätten zu beobachten sind. Die Precursormaterialien flüssigkristalliner Systeme, die zur Herstellung der erfindungsgemäßen Pigmente geeignet sind, basieren auf organischen Edukten, so daß auch keine Probleme mit Verunreinigungen - vor allem toxischen - wie bei anorganischen Materialien auftreten, die auch unter Umständen zu einer Verminderung der Farbreinheit des Precursormaterials führen.

Die erfindungsgemäßen Pigmente enthalten keine problematischen Metalle oder Verbindungen, so daß auch bei der Entsorgung von Bindemittelsystemen enthaltend erfindungsgemäße Pigmente keine Probleme zu erwarten sind.

Die speziellen optischen Eigenschaften verdrillter Schichtsysteme treten erst dann auf, wenn sich die Moleküle in einem definierten Temperaturbereich in zueinander verdrillten Schichten orientiert haben. Im Rahmen der vorliegenden Erfindung sind dafür verschiedene Verfahren geeignet, wobei auch trägerfreie Verfahren, die zur beschriebenen Orientierung der Moleküle führen, angewandt werden können.

Bedingt durch die Interferenzwechselwirkung mit Licht sind zur Erzielung einer hohen Reflexionsintensität mehrere übereinanderliegende, gegeneinander verdrillte Schichten notwendig. Hierbei können Schichtdickeninhomogenitäten im Precursorfilm unter der Bedingung toleriert werden, daß die Moleküle zu einer helixförmigen Schicht orientiert sind. Dies ist im Schichtdickenbereich einiger µm gewährleistet. Aus diesem Grund ist für die Herstellung der erfindungsgemäßen Pigmente eine exakt einzuhaltende Schichtdicke im Bereich weniger nm im Gegensatz zu den Verfahren zur Herstellung von Mehrschicht-Interferenzpigmenten nicht zwingend notwendig. Die Verfahrensschritte zur Herstellung des Precursorfilmes lassen daher größere Schichtdickentoleranzen zu.

Die erfindungsgemäßen Pigmente mit vom Betrachtungswinkel abhängigen Farbeindrücken können in wasserverdünnbare Lacksysteme oder Wasserbasislacksysteme eingearbeitet werden, indem durch Dispergieren mittels bekannter Verfahren für eine gleichmäßige Benetzung der Pigmente mit dem Bindemittel gesorgt wird. Aufgrund ihrer chemischen Struktur (organische Materialien) treten hierbei keine bei vielen konventionellen anorganischen Pigmenten oder Metallic-Aluminium-Flakes zu beobachtenden Probleme mit Wasser (chemische Reaktionen) auf. Die erfindungsgemäßen Pigmente haben zudem keine bei bestimmten Applikationen störende elektrische Eigenleitfähigkeit und sind alkalien- und säurebeständig.

Pulverlack- / High Solid-Systeme sind ebenfalls als Bindemittel, in die erfindungsgemäße Pigmente eingearbeitet werden können, geeignet, da bei den Pigmenten durch die Vernetzungsreaktion die molekulare Schichtstruktur über einen weiten Temperaturbereich konserviert ist. In konventionellen Lösungsmittellacksystemen wie Nitrocellulosen, Alkyd-, Thermoplastic-Acryl-, Urethanacryl-, Polyurethan- oder Polyestersystemen - seien es physikalisch und/oder chemisch trocknende Systeme - sowie in Farblasuren beliebiger Zusammensetzungen lassen sich die beschriebenen Farbeffekte ebenso gut erzielen.

Besonders vorteilhaft ist der über einen breiten Wellenlängenbereich transparente Charakter der beschriebenen Pigmente in photovernetzbaren Lacksystemen, da das zum Start der Photoreaktion benötigte Licht im nahen UV- Bereich (UV A) von den Pigmenten nicht absorbiert wird.

Desweiteren können die Pigmente in Naturharzlacke oder lösungsmittelfreie Lacke eingearbeitet werden oder in Bindemittel, wie sie in Druckfarben für den Sieb- oder Tiefdruck verwendet werden.

Beispielsweise zum Beschichten metallischer Flächen mittels des Coil-Coating-Verfahrens ist eine Verwendung der Flüssigkristall-Pigmente in Acrylester-, Polyester- oder Siliconpolyesterlacksystemen problemlos möglich. Ebenso bietet sich eine Einarbeitung, beispielsweise in Kunststoffe oder in kosmetische Produkte, an. Bei Kunststoffen spielt es dabei keine Rolle, ob eine Einarbeitung in Gießharz, Pulver oder Granulat erfolgt. Geeignete Systeme sind beispielsweise Acrylnitril- Butadien-Styrol-Copolymere, Celluloseacetat, Celluloseacetobutyrat, Celluloseacetopropionat, Cellulosenitrat, Cellulosepropionat, Kunsthorn, Epoxidharze, Polyamid, Polycarbonat, Polyethylen, Polybutylenterephthalat Polyethylenterephthalat, Polymethylmethacrylat, Polypropylen, Polystyrol, Polytetrafluorethylen, Polyvinylchlorid, Polyvinylidenchlorid, Polyurethan, Styrol-Acrylnitril-Copolymere, ungesättigte Polyesterharze oder Kombinationen davon.

Damit sich die beschriebenen Farbeffekte mittels der erfindungsgemäßen Pigmente auf beliebigen Unterlagen ausbilden, müssen die verdrillten Molekülschichten, die in jedem Einzelpigment enthalten sind, möglichst einheitlich über größere Flächenbereiche angeordnet sein, was eine homogene räumliche Ausrichtung der Helixachsen zur Folge hat. Eine homogene räumliche Ausrichtung der Helixachsen ist dann besonders gewährleistet, wenn die plättchenförmigen erfindungsgemäßen Pigmente parallel zueinander ausgerichtet sind.

Die erfindungsgemäßen Pigmente können um so besser einheitlich ausgerichtet werden, je größer ihr Formfaktor ist, d.h. je mehr sich ihre Gestalt in zwei Dimensionen von der dritten unterscheidet.

Damit ist es vorteilhaft, für die in Bindemittel oder andere Substanzen eingearbeiteten Pigmente Verarbeitungsverfahren anzuwenden, die eine einheitliche Ausrichtung der erfindungsgemäßen Pigmente gewährleisten. Es spielt dabei keine Rolle, ob diese Verfahren manuell oder mittels automatischer Hilfseinrichtungen sowie eventuell zusätzlich unter elektrostatischen Bedingungen angewandt werden.

Die erfindungsgemäßen Pigmente, die in ein Bindemittelsystem oder ein anderes Material, beispielsweise ein Massemedium, eingearbeitet sind, können durch Scherkräfte auslösende Methoden orientiert werden. Beispiele für solche Orientierungsmethoden sind Spritzen, Sprühen, Rakeln, Rollen, Walzen, Streichen, Luftbürsten, Streuseln, Tauchen, Fluten, Drucken (Siebdruck, Tiefdruck, Tamponprint, Flexodruck, Offsetdruck), Gießen (Rotationsguß, Spritzguß), Extrudieren (Einschneckenextrudieren, Zweischneckenextrudieren, Coextrudieren), Blasen (Folienblasen, Blasformen), Kalandrieren, Trockenbeschichtungen, Wirbelsintern, TRIBO, ESTA (elektrostatisches Spritzen), ESB (elektrostatische Beschichtung) oder Kaschieren. Besonders bevorzugte Orientierungsmethoden in Bindemitteln sind Spritzen, Sprühen, Drucken und Rakeln.

Durch diese Orientierung tritt der winkelabhängige Farbeffekt mit helikal polarisiertem Licht quasi als aus Einzelpigmenten zusammengesetztes Puzzle so gut auf, wie auf einer auf planarem Untergrund aufgetragenen cholesterischen Flüssigkristallschicht.

Werden die erfindungsgemäßen Pigmente für Farbeffektdarstellungen verwendet, so sind vielfältigste Einsatzmöglichkeiten im Fahrzeugsektor (Land-, Kraft-, Schienen-, Luft-, Wasserfahrzeuge, Fahrräder) samt Zubehör, im Freizeit-, Sport- und Spielsektor, im Kosmetikbereich, im Textil-, Leder- oder Schmuckbereich, im Geschenkartikelbereich, in Schreibutensilien, Emballagen, oder Brillengestängen, im Bausektor (beispielsweise Innenwände, Innenverkleidungen, Fassaden, Tapeten, Türen, Fenster) sowie im Haushaltssektor (beispielsweise Möbel, Geschirr und Haushaltsgeräte) evident. Ebenso lassen sich die Pigmente zur Erzielung der neuartigen Farbeffekte in Druckerzeugnissen aller Art wie beispielsweise Kartonagen, Verpackungen, Tragetaschen, Papiere, Etiketten, Folien verwenden.

Aufgrund der transparenten Eigenschaften der erfindungsgemäßen Pigmente entsteht bei allen Bindemittel- und Massesystemen ähnlich den Perlglanzpigmenten ein Glanzeindruck aus der Tiefe, der in seiner Intensität unerreicht ist, was sich in außergewöhnlich hohem Brillanzempfinden auch unter schlechten Licht- verhältnissen äußert.

Die ausgeprägten winkelabhängigen Farbeffekte mit Lichtpolarisation lassen sich besonders gut auch im Bereich der Sicherheitsmarkierung und des Schutzes vor gefälschten Farbkopien einsetzen. Bedingt durch die Vielfalt der erzielbaren Reflexionswellenlängen vom UV- bis in den IR-Bereich sowie der Kombinationsmöglichkeiten diverser erfindungsgemäßer Pigmente untereinander und mit anderen Pigmenten ist es möglich, Dokumente aller Art, Banknoten, Scheckkarten oder andere bargeldlose Zahlungsmittel oder Ausweise gegen Fälschungen abzusichern. Da sich die erfindungsgemäßen Pigmente mit bekannten Druckverfahren verarbeiten lassen, sind Datenträger mit Sicherheitselementen, die die gleichen Vorteile bieten, wie sie in DE 39 42 66 31 Al beschrieben werden, realisierbar. Die Herstellung solcher Datenträger wird durch die erfindungsgemäßen Pigmente stark vereinfacht. Die Erfindung betrifft somit auch Datenträger enthaltend erfindungsgemäße Pigmente.

Objekte, die mit konventionellen Absorptionspigmenten lackiert sind, wirken stumpf, während dieselben Objekte "lebendig" erscheinen, wenn sie mit einer Lackschicht, in die gleichfarbige erfindungsgemäße Pigmente eingearbeitet wurden, überzogen sind. Durch gezielte Farbkombinationen können die winkelabhängigen Farbeffekte verstärkt oder abgeschwächt werden.

Je nach Funktion der erfindungsgemäßen Pigmente sind verschiedene Schichtaufbauten möglich, mit denen die gewünschten Effekte erzielt werden können. Das einfachste System ist ein Einschichtaufbau, bei dem das Pigment in ein Bindemittel eingearbeitet und appliziert wird. Dies ist vor allem bei Schichtdicken oberhalb 10 - 20 µm, beispielsweise im Siebdruckverfahren möglich. Allerdings führt eine Bindemitteloberfläche, die nicht ideal glatt geformt ist, zu einer diffusen Reflexion an der Grenzfläche zwischen Bindemittel und Luft, so daß die gerichtete Reflexion durch die erfindungsgemäßen Pigmente von der diffusen überlagert wird, was zu einer Abschwächung des Farbeffektes führt.
Diesem Nachteil kann begegnet werden, indem über die Pigment-Bindemittelschicht eine Klarlackschicht überlackiert wird, was zu wesentlich ausgeprägteren brillanten Farbeffekten führt. Die Farbeffekte können weiter verstärkt werden, indem dem Zweischichtsystem bestehend aus erfindungsgemäßen Pigment in Bindemittel und Klarlack eine farbgebende Schicht unterlegt wird. Alternativ ist es möglich, weitere farbgebende Pigmente in das Bindemittel einzuarbeiten, so daß die Deckkraft erhöht wird und die beschriebenen Farbeffekte unabhängig von der Farbe des Untergrundes erzielt werden können. Es muß lediglich darauf geachtet werden, daß die erfindungsgemäßen Pigmente im getrockneten Bindemittelsystem nicht vollständig durch der Lichtquelle zugewandte absorbierende Pigmente abgedeckt werden.

Werden in verschiedenen Wellenlängenbereichen reflektierende erfindungsgemäße Pigmente im Bindemittelsystem gemischt, so können Farbeffekte aus zusammengesetzten Farben der Einzelpigmente erzeugt werden. Durch Zugabe von Metallic-Pigmenten (beispielsweise Aluminium-Flakes) oder Perlglanzpigmenten führen die Effekte je nach Gewichtung der Einzelklassen zu überraschenden Ergebnissen. Je nach Anwendung können die erfindungsgemäßen Pigmente zusätzlich in verschiedensten Teilchengrößen und Teilchengrößenverteilungen hergestellt und eingesetzt werden.

Grobe Teilchen beispielsweise solche mit einem Plättchendurchmesser größer 100 µm bewirken einen flitterartigen, funkelnden Effekt ohne ausgeprägte Deckkraft. Fein gemahlene Teilchen, beispielsweise solche mit einem Plättchendurchmesser von ca. 10 µm führen hingegen zur höherer Deckkraft bei verminderter Einzelbrillanz, zumal wenn sie im Bindemittelsystem nicht parallel zueinander angeordnet sind und somit die Helixachsen der cholesterisch angeordneten Schichten im Raum heterogen angeordnet sind.

Durch Kombination beider Effekte läßt sich somit eine hohe Deckkraft verbunden mit brillantähnlichem Funkeln erzielen. Je nach Betrachtungswinkel verändert sich hierbei die Farbe, was besonders bei sich fortbewegenden gekrümmten Objekten stark ausgeprägt ist. Es versteht sich von selbst, daß auch vorbehandelte Untergründe (beispielsweise funktionelle Schichten wie Rostschutzschichten) mit den optischen Effekten nach beschriebenem Aufbau zusätzlich versehen werden können.

Die folgenden Beispiele dienen zur weiteren Erläuterung der Erfindung. Hierbei werden in den Beispielen 1 - 4 die Pigmentherstellung, in den Beispielen 5 - 12 Vertreter verschiedener Bindemittelsysteme, in den Beispielen 13 - 18 Methoden zur Ausrichtung der erfindungsgemäßen Pigmente in Bindemittelsystemen und in den Beispielen 19 - 25 Anwendungsgebiete der erfindungsgemäßen Pigmente in einer effektgebenden Funktion beschrieben. In den Beispielen 26 - 35 werden verschiedenartige Farbschichtaufbauten vorgestellt.

### Beispiel 1

### A: Polyorganosiloxane mit methacrylsäurehaltigen Seitenketten

Eine Lösung aus 233 g 4-(Prop-2-en-1-oxy)benzoesäurecholesterinester (erhältlich gemäß DE-A 31 10 048), 178 g 4-(Prop-2-en-1-oxy)benzoesäure(4-trimethylsiloxyphenyl)ester (erhältlich gemäß EP-A-358 208, Seite 9, Abschnitt C) und 56,9 g Tetramethylcyclotetrasiloxan in 400 ml Toluol wurde in Gegenwart von 24 mg Dicyclopentadienplatindichlorid 1 h und nach Zusatz einer Lösung von 1,2 g NaOH in 50 ml Ethanol weitere 7 h unter Rückfluß gekocht, um den Silylether zu spalten. Die Reaktionsmischung wurde auf 1/3 ihres Volumens im Rotationsverdampfer eingeengt, mit 7,5 g p-Toluolsulfonsäure und 154 g Methacrylsäureanhydrid versetzt und 1 h auf 100°C erwärmt. Nach dem Abdestillieren der flüchtigen Bestandteile wurde zweimal mit Methylenchlorid/Ethanol umgefällt.

Das Produkt hatte folgende physikalischen und thermodynamischen Daten: Glaspunkt: 14°C, Klärpunkt: 141°C.

### B: Darstellung eines Pigments

4 g des Polyorganosiloxans, hergestellt wie in A beschrieben, wurden auf 70°C erwärmt und mit 0,11 g 2-Methyl-1-[4-(methylthio)phenyl]-2-morpholino-propanon-1 (erhältlich unter der Bezeichnung ®Irgacure 907 bei Ciba Marienberg GmbH, 6140 Bensheim 1) unter Umrühren homogen vermischt. Man erhielt eine rötlich schimmernde, zähflüssige LC-Masse. Das flüssigkristalline Material wurde bei 120°C mit Hilfe einer Rakel auf eine Polyethylenterephthalatfolie (Hoechst AG, Geschäftsbereich Folien, 6200 Wiesbaden 1) in Schichtdicken von 7 µm aufgetragen, wobei die Folie unter der fixierten Rakel mit einer Laufgeschwindigkeit von etwa 2 m/min fortbewegt wurde. Gleichzeitig erfolgte aufgrund des Schergefälles zwischen Rakel und Folie die Orientierung der flüssigkristallinen Moleküle, was durch eine rote Farberscheinung der Flüssigkristallschicht sichtbar wurde. Anschließend wurde diese Schicht mit Hilfe einer Quecksilberentladungslampe (80 W/cm) 5 Sekunden bestrahlt und so dreidimensional vernetzt. Der auf der Folie entstandene Film war im heißen und kalten Zustand klebfrei und spröde. Er hatte eine Reflexionswellenlänge von 560 nm. (Einfallswinkel und Beobachtungswinkel 45°). Die mechanische Abtrennung des auf diese Weise erhaltenen flüssigkristallinen Materials von der Unterlage wurde dadurch erreicht, daß die Folie über eine Umlenkrolle mit 10 cm Durchmesser geführt wurde und so das vernetzte Material vom Träger abblättert. Das Mahlen des vernetzten, substratfreien Materials wurde in einer Universalmühle durchgeführt. Durch 5 minütiges Mahlen der überwiegend in Blättchenform (Größe: einige Millimeter bis Zentimeter) anfallenden vernetzten Polyorganosiloxane entstand eine pulverförmige Fraktion. Das Mahlgut wurde dann zur Verengung der Korngrößenverteilung einem Siebprozeß unterworfen. Dazu wurden die gemahlenen Pigmente mittels eines Analysensiebes mit einer Maschenweite von 50 µm gesiebt.

### Beispiel 2

### A: Herstellung einer blauen Flüssigkristallmischung

Wie in Beispiel 1 beschrieben, wurden 6 g des Polyorganosiloxans hergestellt. Dieses wurde in 50 ml Toluol gelöst. Dieser Lösung wurden 2.6 g Methacrylsäurecholesterinester (hergestellt wie in De Visser et al., J. Polym. Sci., A 1(9), 1893 (1971) beschrieben) und 9 mg Aluminiumkupferron (erhältlich unter der Bezeichnung Q1301 von Wako Chemicals GmbH, 4040 Neuss) zugegeben. Das Toluol wurde dann unter Vakuum bei 70°C im Rotationsverdampfer entfernt. Es entstand eine zähflüssige LC-Masse mit folgenden physikalischen und thermodynamischen Daten: Glaspunkt: 4°C, Klärpunkt: 132°C.

### B: Darstellung eines Pigments

4 g der LC-Masse, hergestellt wie unter A beschrieben, wurden auf 70°C erwärmt und mit 0.11 g 2-Methyl-1-(4-(methylthio)phenyl)-2-morpholino-Propanon-l (erhältlich unter der Bezeichnung ®Irgacure 907 bei Ciba Marienberg GmbH, 6140 Bensheim 1) unter Umrühren homogen vermischt. Das flüssigkristalline Material wurde weiterverarbeitet wie unter B in Beispiel 1 beschrieben, wobei es mit einer Temperatur von 80°C auf der Folie aufgetragen und photochemisch vernetzt wurde. Der auf der Folie entstandene Film hatte eine Reflexionswellenlänge von 400 nm. Die Pigmente hatten eine intensiv blaue Farbe.

### Beispiel 3

### A: Darstellung eines polymerisierbaren Monomeren:

### Methacryloxybenzoesäure(4-ethylphenyl)ester

Eine Lösung von 16,9 g 4-Trimethylsilyloxybenzoesäure(4-ethyl)phenylester (hergestellt analog der Vorschrift in EP-A-358 208, Seite 9, Abschnitt C) in 15 ml Toluol und 10 ml Ethanol wurde 1 Stunde unter Rückfluß gekocht und anschließend durch Erhitzen auf 100°C für 60 min von flüchtigen Bestandteilen befreit. Die verbliebenen 13,3 g 4-Hydroxybenzoesäure(4-ethyl)phenylester wurden zusammen mit 30 g Methacrylsäureanhydrid und 1,2 g Toluolsulfonsäure in 15 ml Toluol gelöst und 1 h auf 100°C erwärmt. Nach dem Abkühlen wurde das Produkt mit Hexan ausgefällt und aus Ethanol umkristallisiert.

### B: Herstellung einer roten Flüssigkristallmischung

6 g des Polyorganosiloxans, hergestellt wie in Beispiel 1 A wurden in 50 ml Toluol gelöst. Dieser Lösung wurden 1,5 g Methacryloxybenzoesäure(4-ethyl-phenyl)ester (hergestellt wie in Bsp.3 A) und 7,5 mg Aluminiumkupferon (erhältlich unter der Bezeichnung Q 1301 bei Wako Chemicals GmbH, 4040 Neuss) zugegeben. Das Toluol wurde dann unter Vakuum bei 70°C im Rotationsverdampfer entfernt.
Es entsteht eine zähflüssige LC-Masse mit folgenden physikalischen und thermodynamischen Daten: Glaspunkt: -2°C, Klärpunkt: 124°C.

### C: Darstellung eines Pigments

Die so erhaltene Mischung wurde behandelt wie in Beispiel 2B beschrieben. Der auf der Folie entstandene Film hatte eine Reflexionswellenlänge von 630 nm. Man erhält Pigmente mit einer intensiv roten Farbe.

### Beispiel 4

### A: Herstellung einer grünen Flüssigkristallmischung

2,8 g der roten Farbmischung (hergestellt wie in Beispiel 3 B beschrieben), 1,2 g der blauen Farbmischung (hergestellt wie in Beispiel 2 A beschrieben) und 0,11 g 2-Methyl- 1-[4-(methylthio)phenyl]-2-morpholino-propanon-1 (erhältlich unter der Bezeichnung ®Irgacure 907 bei Ciba Marienberg GmbH, 6140 Bensheim 1) wurden unter Umrühren homogen vermischt. Man erhält eine grünlich schimmernde, zähflüssige LC-Masse mit folgenden thermodynamischen Daten: Glaspunkt: 2°C, Klärpunkt: 128°C.

### B: Darstellung eines Pigments

Die so erhaltene Mischung wurde wie in Beispiel 2B beschrieben weiterverarbeitet, indem sie bei einer Temperatur von 80°C auf eine Folie aufgetragen und photochemisch vernetzt wurde. Der auf der Folie entstandene Film hatte eine Reflexionswellenlänge von 530 nm. Man erhält Pigmente mit einer intensiv grünen Farbe.

### Beispiel 5

### Erfindungsgemäße Pigmente in einem wasserverdünnbaren Lacksystem

1 g der nach Beispiel 4 B hergestellten grünen Pigmente wurden in 19 g Glemadur Glanz Klarlack 572 (wasserverdünnbarer Profilholzlack auf Acrylbasis, Fa. Herberts, Münster) eingerührt und auf ein Schwarz-Weiß-Papier (Prüfkarte 2854 Byk Gardner, Geretsried) aufgestrichen. Man erkennt schon ohne Klarlackschicht den grün-blauen Farbflop-Effekt, der durch Überlackierung mit pigmentfreiem Glemadur Klarlack verstärkt wird.

### Beispiel 6

### Erfindungsgemäße Pigmente in einem Pulverlacksystem

10 g der nach Beispiel 3 C hergestellten Pigmente wurden in 100 g Polyester-Pulverklarlack (Fa. DSN, Meppen) gemischt und anschließend mit einer Pulverhandpistole (ESB Integral 2020, Fa. Wagner, Meersburg) auf ein schwarz lackiertes Blech aufgetragen. Der Einbrennvorgang wurde 10 Minuten bei 180°C durchgeführt. Je nach Blickwinkel zeigte sich eine brillante Farbverschiebung von rot nach grün und umgekehrt.

### Beispiel 7

### Erfindungsgemäße Pigmente in einem lösungsmittelhaltigen Bindemittelsystem

a) 1 g der nach Beispiel 3 C hergestellten roten Pigmente wurden 5 Minuten unter Rühren in 10 g Centari-Verdünner (Du Pont, Mechelen) dispergiert. Diese Dispersion wurde in ein Gemisch aus 6 g Lack (High Solids Clear AX 1060, Du Pont) und 3 g Härter (High Solids Activator AK 260, Du Pont) eingearbeitet. Die so erhaltene Lackformulierung wurde mit Hilfe einer Farbspritzpistole (Fa. Sata-Farbspritztechnik GmbH, Ludwigsburg) in Form feiner Tröpfchen auf ein schwarz grundiertes Blech (Format: 20 cm ∗ 12 cm) aufgetragen. Nach Trocknen (2h, 60°C) wurde mit einer Klarlackschicht bestehend aus 10 g Verdünner, 18 g AX 1060 und 6 g AK 260 (Du Pont) überlackiert. Man erhält eine brillante rote Farbe mit ausgeprägtem Grün-Farbflop.
b) 3 g der nach Beispiel 3 C hergestellten roten Pigmente wurden in 30 g Siliconalkydharzklarlack (Fa. Wacker-Chemie GmbH, München) dispergiert und mittels einer 100 µm Filmziehspiralrakel auf ein schwarz lackiertes Blech aufgetragen. Die Trocknung erfolgte bei Raumtemperatur. Die brillante Rotfärbung ändert sich bei verändertem Blickwinkel nach Grün, wobei einzelne Rotpartikel noch lange sichtbar sind.

### Beispiel 8

1 g der nach Beispiel 3 C hergestellten roten Pigmente wurden in 19 g Leinölfirniß (Fa. Akzo) dispergiert und auf ein schwarz lackiertes Holz aufgestrichen. Die Trocknung erfolgte bei Raumtemperatur. Es zeigte sich eine gute Farbbrillanz mit guter Farbverschiebung von rot nach grün.

### Beispiel 9

### Erfindungsgemäße Pigmente in einem Coil-Coating-System

3 g der nach Beispiel 3 C hergestellten roten Pigmente wurden in 27 g Siliconpolyester (Fa. Wacker Chemie GmbH, München) dispergiert und auf ein schwarz grundiertes Blech mit einer Spiralfilmziehrakel (100 µm) aufgetragen. Die Trocknungsbedingungen waren 90 Sekunden bei 250°C. Auf dem Blech sah man eine deutliche Farbverschiebung von rot nach grün. Die Brillanz war etwas schwächer als bei Raumtemperatur getrockneten Formulierungen.

### Beispiel 10

### Erfindungsgemäße Pigmente in einem Epoxidharz

a) 5 Gewichtsteile der nach Beispiel 4 B hergestellten grünen Pigmente wurden in 95 Gewichtsteilen Epo-tek 301® (Zweikomponentensystem; A:B = 4:1, Fa. Polytec GmbH, Waldbronn) gut eingerührt und auf einen schwarz grundierten Untergrund gerakelt. Nach Trocknung (1 h, 65°C) wird ein brillanter Grün-Blau-Farbeffekt auch ohne zusätzliche Klarlackschicht erzielt.
b) 3 g der nach Beispiel 3 C hergestellten roten Pigmente wurden in 27 g Epoxidharzlösung (Fa. Shell Epikote 1001)® dispergiert und mittels einer Farbspritzpistole auf ein schwarz lackiertes Blech aufgetragen. Nach der Trocknung zeigte sich eine sehr gute Farbbrillanz bei guter Farbverschiebung.

### Beispiel 11

### Erfindungsgemäße Pigmente in einem Acrylatsystem

3 g der nach Beispiel 3 C hergestellten roten Pigmente wurden in 27g Acrylatharz (Fa. Rohm und Haas) eingemischt und auf ein schwarz grundiertes Blech mit einer Kastenrakel (100 µm) aufgetragen. Die Einbrennzeit beträgt 30 Minuten bei 150°C. Nach Auftragung einer Klarlackschicht zeigt das Blech eine brillante rote Farbe, die bei flacherem Betrachtungswinkel in grüne Farbtöne übergeht.

### Beispiel 12

### Erfindungsgemäße Pigmente in Kunststoffen

0.5 Gewichtsteile der nach Beispiel 4 B hergestellten grünen Pigmente wurden in 99.5 Gewichtsteilen Plexiglasgranulat homogenisiert und in der Presse bei 200°C zu einer runden Scheibe geformt. Man erhält eine grün eingefärbte Scheibe mit bekanntem Farbflop in den blauen Spektralbereich.

Um verschiedene Methoden zur Ausrichtung der Einzelpigmente in einem getrockneten Bindemittelsystem vergleichen zu können, wurde in den folgenden Beispielen 13 - 18 einheitlich mit grünen Pigmenten gemäß Beispiel 4 B gearbeitet.

### Beispiel 13

### Ausrichtung der erfindungsgemäßen Pigmente: Spritzen des Pigment-Lack-Systems

1 g der grünen Pigmente wurden 5 Minuten unter Rühren in 20 g Verdünner (Permacron® Supercryl, Verdünnung 3054, Fa. Spies und Hecker, Köln) dispergiert. Diese Dispersion wurde in ein Gemisch aus 50 g Lack (Permacron® MS Klarlack 8010, Spies und Hecker) und 25 g Härter (Permacron® MS Special Härter 3368, Spies und Hecker) zugegeben. Die so erhaltene Lackformulierung wurde mit Hilfe einer Farbspritzpistole (Fa. Sata-Farbspritztechnik GmbH, Ludwigsburg) in Form feiner Tröpfchen auf ein schwarz grundiertes Blech (Größe 20 cm ∗ 12 cm) aufgetragen. Nach dem Lackieren wurde 30 Minuten lang bei 80°C vorgetrocknet und als Schutzschicht ein Clearcoat (Lackformulierung wie beschrieben, jedoch ohne Pigmente) aufgetragen. Das Blech hat eine brillante grüne Farbe bei nahezu senkrecht einfallendem Beleuchtungs- und Beobachtungswinkel. Diese grüne Farbe geht kontinuierlich in eine blaue Farbe über, wenn unter flacheren Winkeln beleuchtet und beobachtet wird. Auch unter schlechten Lichtverhältnissen erscheint das Blech brillant mit einzelnen funkelnden Farbpigmenten.

### Beispiel 14

### Ausrichtung der erfindungsgemäßen Pigmente: Rakeln des Bindemittel-Pigment-Systems

1 g der grünen Pigmente wurden in ein Hochglanzklarlacksystem, wie in Beispiel 5 beschrieben, eingearbeitet und mit einer Rakel auf schwarzes Zander-Papier aufgetragen. Auch in diesem Beispiel kann eine brillante grüne Farbe mit Farbflop in den blauen Spektralbereich beobachtet werden, wobei ähnliche Effekte unter ungünstigen Lichtverhältnissen erzielt werden wie beim Spritzverfahren gemäß Beispiel 13.

### Beispiel 15

### Ausrichtung der erfindungsgemäßen Pigmente: Streichen des Bindemittel-Pigment-Systems

1 g der grünen Pigmente wurden in 19 g Glemadur Glanz Klarlack 572 (Fa. Herberts, Münster) eingearbeitet und auf ein Schwarz-Weiß-Papier (Prüfkarte Nr. 2854, Byk Gardner, Geretsried) mit einem herkömmlichen Farbpinsel aufgestrichen. Auch ohne eine darüberliegende Klarlackschicht konnte ein brillanter Farbeffekt erzielt werden.

### Beispiel 16

### Ausrichtung der erfindungsgemäßen Pigmente: Streuseln der Pigmente auf ein Bindemittelsystem

1 g der grünen Pigmente wurden auf ein Epoxidharz (Epo-tek® 301, A:B = 4:1, Fa. Polytec GmbH, Waldbronn) manuell aufgestreuselt. Man beobachtet eine brillante grüne Farbe mit blauem Farbflop.

### Beispiel 17

### Ausrichtung der erfindungsgemäßen Pigmente: Tauchen des Pigment-Lack-Systems

1 g der grünen Pigmente wurden in 19 g Glemadur Glanz Klarlack 572 (Fa. Herberts) eingearbeitet. Ein schwarz grundiertes Blech (Format 20 cm ∗ 12 cm) wurde in das Pigment-Lack-Gemisch eingetaucht, abtropfen gelassen und abgelüftet. Anschließend wurde das Blech in das in Beispiel 10 aufgeführte 2 K- Klarlacksystem (Permacron®, Spies und Hecker) eingetaucht, wiederum abtropfen gelassen, abgelüftet und 60 Minuten bei 80°C getrocknet. Man beobachtet eine grüne Farbe mit blauem Farbflop, wobei der Effekt etwas schwächer als beim Spritzen ausgeprägt ist.

### Beispiel 18

### Ausrichtung der erfindungsgemäßen Pigmente: Gießen des Matrix-Pigment-Systems

10 Gewichtsteile Weich-PVC (erhältlich bei Vinnolit Kunststoff GmbH München unter der Bezeichnung Vinnol® P 70 F), 50 Gewichtsteile Phthalsäure-bis-(2-ethylhexylester), 1 Gewichtsteil Barium-Zink-Stabilisator (erhältlich als Irgastab BZ 505 bei Ciba, Basel) und 7.5 Gewichtsteile der grünen Pigmente wurden zusammengegeben, homogenisiert und auf eine Glasplatte aufgegossen. Nach 10-minütigem Gelieren im Trockenschrank bei 180° C erhält man einen transparenten Film, der den beschriebenen winkelabhängigen Farbeffekt aufweist.

### Beispiel 19

### Effektgebende Funktion der erfindungsgemäßen Pigmente: Anwendungsbeispiel Modellauto

Um die mit den erfindungsgemäßen Pigmenten erzielbaren Effekte bei einer Kraftfahrzeuglackierung demonstrieren zu können, wurden die erfindungsgemäßen Pigmente in ein Klarlacksystem eingearbeitet und auf ein Modellauto aufgetragen. Hierzu wurden 10 g der nach Beispiel 3 C hergestellten roten Pigmente 5 Minuten unter Rühren in 20 g Verdünner (Permacron® Supercryl, Verdünnung 3054, Fa. Spies und Hecker, Köln) dispergiert. Diese Dispersion wurde in ein Gemisch aus 50 g Lack (Permacron® MS Klarlack 8010, Spies und Hecker) und 25 g Härter (Permacron® MS Special Härter 3368, Spies und Hecker) zugegeben.

Die so erhaltene Lackformulierung wurde mit Hilfe einer Farbspritzpistole (Fa. Sata-Farbspritztechnik GmbH, Ludwigsburg) in Form feiner Tröpfchen auf ein schwarz grundiertes Modellauto (Fa. Bauer, Modell Mercedes 300 S, Baujahr 1955, Maßstab 1:18) gleichmäßig aufgesprüht. Nach dem Lackieren wurde 30 Minuten lang bei 80°C vorgetrocknet und als Schutzschicht ein Clearcoat (Lackformulierung wie beschrieben, jedoch ohne Pigmente) aufgetragen. Je nach Position der Lichtquelle relativ zum Objekt sind an unterschiedlichen Stellen des Modellautos sich kontinuierlich verändernde Farbeindrücke im gesamten Spektralbereich zwischen rot und grün zu beobachten.

### Beispiel 20

### Effektgebende Funktion der erfindungsgemäßen Pigmente: Anwendungsbeispiel Ski

Ein Paar Ski werden entfettet und einer Grundfarbe (Brillux Mattlack 180 schwarz) mit einer Farbspritzpistole (Fa. Sata-Farbspritztechnik GmbH, Ludwigsburg) schwarz grundiert. Nach Trocknen dieser Schicht und nochmaliger Entfettung wird ein Lacksystem, bestehend aus grünen Pigmenten gemäß Beispiel 4 B und einem klaren Basislack, wie in Beipiel 19 beschrieben, aufgetragen, abgelüftet, mit dem in Beispiel 19 dargestellten Klarlacksystem überlackiert und bei Raumtemperatur einige Tage getrocknet. Man erhält Ski mit brillant funkelnden, mit dem Betrachtungswinkel stark variierenden Farbeffekten, die vor allem bei kontrastreichen, hellen Untergründen (z.B. Schnee in der Sonne) besonders stark ausgeprägt sind.

### Beispiel 21

### Effektgebende Funktion der erfindungsgemäßen Pigmente: Anwendungsbeispiel Tennisschläger

Ein Tennisschläger wurde nach der in Beispiel 20 beschriebenen Methode lackiert. Man beobachtet einen ähnlich brillanten Farbeffekt wie bei den Ski in Beispiel 20.

### Beispiel 22

### Effektgebende Funktion der erfindungsgemäßen Pigmente: Anwendungsbeispiel T-Shirt

20 g der nach Beispiel 4 B hergestellten grünen Pigmente wurden in 60 g Verdicker Lutexal HEF (Fa. BASF, Ludwigshafen), 815 g destilliertes Wasser, 5 g Luprintol PE neu (Fa. BASF, Ludwigshafen) und 100 g Binder Helizarin ET (Fa. BASF, Ludwigshafen) eingearbeitet. Die Mischung wurde anschließend auf ein schwarzes T-Shirt aufgetragen, indem sie mit einem Glasstab über eine auf das Textilstück gelegte Schablone gestrichen wurde. Nach Entfernung der Schablone erkennt man eine intensiv grüne Farbe mit kontinuierlichem Farbflop in den blauen Spektralbereich, wobei sich Schriftzüge oder graphische Darstellungen mit dem winkelabhängigen Farbeffekt kombinieren lassen.

### Beispiel 23

### Effektgebende Funktion der erfindungsgemäßen Pigmente: Anwendungsbeispiel Pasten-PVC-Beschichtung

10 Gewichtsteile Weich-PVC (erhältlich bei Vinnolit Kunststoff GmbH München unter der Bezeichnung Vinnol P 70 F)®, 50 Gewichtsteile Phthalsäure-bis-(2-ethylhexylester), 1 Gewichtsteil Barium-Zink-Stabilisator (erhältlich als Irgastab BZ 505 bei Ciba, Basel) und 7.5 Gewichtsteile der nach Beispiel 4 B hergestellten grünen Pigmente wurden zusammengegeben, im Turrax vermischt, mit Hilfe einer Rakel auf ein schwarzes Baumwollgewebe (Format: 30 cm ∗ 40 cm) in Schichtdicken von etwa 100 µm aufgetragen und 10 Minuten bei 180°C im Trockenschrank getrocknet. Man erhält Gewebestücke mit brillant funkelnden Pigmenten mit kontinuierlichem Farbflop im Spektralbereich zwischen grün und blau.

### Beispiel 24

### Effektgebende Funktion der erfindungsgemäßen Pigmente: Anwendungsbeispiel Papierbeschichtung

1 g der nach Beispiel 3 C hergestellten roten Pigmente wurden durch 10-minütiges Umrühren in 19 g eines Hochglanz-Klarlackes (Impredur Hochglanz Klarlack 784, Fa. Brillux, Münster) dispergiert, in Schichtdicken von 30 µm bis 40 µm auf ein schwarzes Papier (Chromolux 82 g / cm², Fa. Zanders, Bergisch-Gladbach) mit Hilfe einer Rakel aufgetragen und bei Raumtemperatur getrocknet. Der erhaltene winkelabhängige brillante Farbeffekt der Papierbeschichtung ist vergleichbar mit dem in Beispiel 19 beschriebenen.

### Beispiel 25

### Effektgebende Funktion der erfindungsgemäßen Pigmente: Anwendungsbeispiel Kartonagen

Ein schwarzer Karton (Chromolux 250 g / cm²) wurde wie in Beispiel 24 beschrieben mit roten Pigmenten beschichtet. Der erhaltene Farbeffekt ist vergleichbar mit demjenigen auf dem schwarzen Papier des vorhergehenden Beispiels und kann noch gesteigert werden, indem mit einer Klarlackschicht (Brillux Klarlack ohne Pigmente) überlackiert wird.

### Beispiel 26

### Auftragung der erfindungsgemäßen Pigmente mittels eines Einschichtaufbaus

1 g der nach Beispiel 4 B hergestellten grünen Pigmente wurden in 19 g schwarzem Basislack (Brillux Mattlack 180 schwarz) dispergiert und mit der in Beispiel 13 aufgeführten Spritzmethode auf ein Schwarz-Weiß-Papier (Prüfkarte Nr. 2854, Byk Gardner, Geretsried) aufgetragen. Bedingt durch das hohe Deckvermögen des schwarzen Basislackes werden die weiße und die schwarze Fläche des verwendeten Papiers gleichermaßen abgedeckt. Einzelne grün funkelnde Pigmente hoher Brillanz überlagern dabei den schwarzen Farbeindruck, wobei der Farbflop im blauen Spektralbereich abgeschwächt erscheint.

### Beispiel 27

### Auftragung der erfindungsgemäßen Pigmente in Farblasuren mittels eines Zweischichtaufbaus

a) dunkler Untergrund: 6 g der nach Beispiel 4 B hergestellten grünen Pigmente wurden zunächst in 6 g Verdünner 3363 (Firma Spies und Hecker, Köln) dispergiert, anschließend wurden 14 g Blaulasur Serie 257 (Spies und Hecker) sowie 7 g Härter 3040 (Spies und Hecker) zugegeben. Dieses Lacksystem wurde auf ein dunkelgrau grundiertes Blech (Lackierung mit Alkydharzlack der Fa. Südwestchemie, Ulm), wie in Beispiel 13 beschrieben, aufgespritzt, 10 Minuten abgelüftet und mit dem in Beispiel 13 verwendeten Klarlacksystem überlackiert. Man erhält eine intensiv blau-grüne Farbe hoher Brillanz mit Farbflop in den blauen Spektralbereich.
b) (Vergleichsbeispiel) heller Untergrund: Es wurde wie in Beispiel 27 a) verfahren, jedoch mit einem hellgrau grundierten Blech (Untergrundfarbe: Alkydharzlack der Firma Südwestchemie, Ulm). Die grün-blaue Farbe ist infolge der eingeschränkten Deckkraft des verwendeten Farblasursystems abgeschwächt, da der durch gerichtete Reflexion der Pigmente hervorgerufene Farbeffekt von der ungerichteten Reflexion der helleren Untergrundfarbe infolge diffuser Lichtstreuung überlagert wird.

### Beispiel 28

### Erfindungsgemäße Pigmente in einem Dreischichtaufbau

1 g der nach Beispiel 4 B hergestellten grünen Pigmente wurden in 1 g Verdünnung 3054 (Firma Spies und Hecker, Köln) dispergiert und in 5 g Klarlack 8010 (Spies und Hecker) sowie 2.5 g Härter 3368 (Spies und Hecker) eingearbeitet. Mit der in Beispiel 13 aufgeführten Spritzmethode wurde zunächst auf ein entfettetes Aluminiumblech ein Schwarzlack (Brillux Mattlack 180 schwarz) deckend aufgetragen. In einem zweiten Spritzgang wurde dann das Pigment-Basislacksystem aufgespritzt.

Man erhält eine homogen grün gefärbte Fläche mit dem charakteristischen blauen Farbflop, wobei dieser Farbeindruck etwas matt erscheint.

Wird diese Fläche wie in Beispiel 13 mit einem Klarlack überlackiert, so kommt zusätzlich die Tiefenwirkung der transparenten Pigmente voll zur Geltung, da in diesem Fall keine störende diffuse Lichtstreuung die gerichtete Reflexion der Pigmente überlagert. Im Gegensatz zu dem in Beispiel 26 durchgeführten Einschichtaufbau erscheint das lackierte Aluminiumblech in diesem Dreischichtaufbau homogen brillant grün mit einem stark ausgeprägten blauen Farbflop, da in der gesamten Pigment-Basislackschicht keine lichtabsorbierenden Pigmente vorhanden sind.

### Beispiel 29

### Erfindungsgemäße Pigmente auf verschiedenfarbigen Untergründen

a) rote Pigmente auf rotem Untergrund: 1 g der nach Beispiel 3 C hergestellten roten Pigmente wurden in 1 g Verdünnung 3054 (Firma Spies und Hecker, Köln) dispergiert und in 5 g Klarlack 8010 (Spies und Hecker) sowie 2.5 g Härter 3368 (Spies und Hecker) eingearbeitet. Ein Blech (Format 20 cm ∗ 12 cm) wurde mit einem roten Lackspray (Multona rot 0365, Fa. Auto-K, Gundelsheim) nach Entfettung nach dem in Beispiel 13 beschriebenen Verfahren lackiert. Das Pigment- Bindemittel-System wurde wie in Beispiel 13 auf das farbig lackierte Blech aufgetragen und wie üblich mit einer Klarlackschicht versehen. Man erhält ein bei nahezu senkrechtem Beleuchtungs- und Beobachtungswinkel rot wirkendes Blech, das bei flacheren Winkeln in verschiedenen Orangetönen erscheint, was durch die Überlagerung der roten Absorptionsfarbe mit der grünen Farbflop-Reflexionsfarbe des erfindungsgemäßen Pigmentes erklärt werden kann und der Beobachtung in Abb. 9 der Publikation "Eberle et al." entspricht.
b) rote Pigmente auf blauem Untergrund: Wird der rote Untergrund aus Beispiel 29 a) durch einen blauen Untergrund (Multona 0800, Auto-K) ersetzt, so zeigt das resultierende Blech einen inversen Farbflop von violetten Farbtönen in grün-blaue Bereiche, was ebenfalls der Beobachtung in der in Beispiel 29 a) zitierten Publikation entspricht.

### Beispiel 30

### Mischungen erfindungsgemäßer Pigmente untereinander

0.33 g der nach Beispiel 2 B hergestellten blauen Pigmente, 0.33 g der nach Beispiel 3 C hergestellten roten Pigmente und 0.33 g der nach Beispiel 4 B hergestellten grünen Pigmente wurden in 1 g Verdünnung 3054 (Firma Spies und Hecker, Köln) dispergiert und in 5 g Klarlack 8010 (Spies und Hecker) sowie 2.5 g Härter 3368 (Spies und Hecker) eingearbeitet. Auf ein mit Schwarzlack (Brillux Mattlack 180 schwarz) grundiertes Blech (Format: 20 cm ∗ 12 cm) wurde mit der in Beispiel 13 aufgeführten Spritzmethode das Klarlack-Pigment-System aufgetragen. In einem zweiten Spritzgang wurde das Blech wie in Beispiel 13 beschrieben mit einem Klarlack überlackiert. Man erhält bei nahezu senkrechtem Lichteinfall violett-grünliche Farben, die bei flacherem Betrachtungswinkel kontinuierlich in verschiedene grün-blaue Farbtöne übergehen.

### Beispiel 31

### Mit Absorptionspigmenten eingefärbte erfindungsgemäße Pigmente in einem Zweischichtaufbau

95 g der nach Beispiel 3 B hergestellten roten Flüssigkristallmischung, 5 g der nach Beispiel 2 A hergestellten blauen Flüssigkristallmischung und 2,5 g Photoinitiator Irgacure® 907 (Ciba, Bensheim), werden auf 90°C erwärmt und mit 1 g Sicoflush 4120 Rot (BASF, Ludwigshafen) 2 Minuten mit einem Laborschnellrührer homogen vermischt. Die fertige Mischung wird bei 90°C wie in Beispiel 1 B beschrieben zu Pigmenten weiterverarbeitet. Die Pigmente werden wie in Beispiel 26 beschrieben auf ein Schwarz-Weiß-Papier aufgetragen. Auf beiden Farbflächen des Papiers beobachtet man eine rote Farbe mit Tiefenglanz und Farbflop in orange Töne.

### Beispiel 32

### Mischungen von erfindungsgemäßen Pigmenten und Absorptionspigmenten

1 g der nach Beispiel 3 C hergestellten roten Pigmente und 0.2 g Blaupigmente, Heliogenblau, (BASF, Ludwigshafen) wurden in 1.5 g Verdünnung 3054 (Firma Spies und Hecker, Köln) dispergiert und in 5 g Klarlack 8010 (Spies und Hecker) sowie 2.5 g Härter 3368 (Spies und Hecker) eingearbeitet. Nach Auftragung auf ein Schwarz-Weiß-Papier (Prüfkarte Nr. 2854, Byk Gardner) erhält man einen violetten Farbton mit Farbflop in Türkisgrün auf dem weißen und schwarzen Teil des Prüfpapiers.

### Beispiel 33

### Mischungen erfindungsgemäßer Pigmente mit Metallicplättchen

0.8 g der nach Beispiel 2 C hergestellten blauen Pigmente und 0.2 g Stapa® Metallux R 8754 (Eckart-Werke, Fürth) wurden in 1 g Verdünnung 3054 (Firma Spies und Hecker, Köln) dispergiert und in 5 g Klarlack 8010 (Spies und Hecker) sowie 2.5 g Härter 3368 (Spies und Hecker) eingearbeitet. Nach Auftragung auf ein Schwarz-Weiß-Papier (Prüfkarte Nr. 2854, Byk Gardner) erhält man einen blauen Farbton mit blauviolettem Farbflop.

### Beispiel 34

### Mischungen erfindungsgemäßer Pigmente mit Interferenzpigmenten

0.8 g der nach Beispiel 3 C hergestellten roten Pigmente und 0.2 g Iriodin® 522 Rotbraunsatin (Fa. Merck, Darmstadt) wurden in 1 g Verdünnung 3054 (Firma Spies und Hecker, Köln) dispergiert und in 5 g Klarlack 8010 (Spies und Hecker) sowie 2.5 g Härter 3368 (Spies und Hecker) eingearbeitet. Nach Auftragung auf ein schwarz lackiertes Blech erhält man einen rötlich-grünlich schimmernden Braunfarbton.

### Beispiel 35

### Erfindungsgemäße Pigmente mit unterschiedlichen Teilchengrößen

Rote, in Blättchenform anfallende vernetzte Polyorganosiloxane, die nach Beispiel 3 B hergestellt wurden, wurden in einer Mühle gemahlen und einem Siebprozeß unterworfen.

Zur Herstellung einer besonders feinkörnigen Fraktion wurde ein Sieb mit einer Maschenweite von 32 µm benutzt. Zur Herstellung einer grobkörnigen Fraktion wurden die blättchenförmigen Polyorganosiloxane zunächst mit einem Sieb mit einer Maschenweite von 100 µm und anschließend der Überstand mit einem Sieb mit einer Maschenweite von 160 µm gesiebt, so daß eine grobkörnige Fraktion mit Teilchengrößen zwischen 100 µm und 160 µm entstand.

Werden die beiden Pigmentfraktionen getrennt nach dem in Beispiel 13 aufgeführten Verfahren auf ein Schwarz-Weiß-Papier aufgespritzt, so erkennt man im Fall der feinkörnigen Fraktion eine homogen rote Fläche mit grünem Farbflop, während die größeren Rotpigmente zu lebhaften, glitzernden Farbeffekten führen. Bei einer Mischung aus 80 Teilen feinkörnigen und 20 Teilen grobkörnigen Pigmenten werden beide Effekte kombiniert.

### Beispiel 36

### Farbeffekte von erfindungsgemäßen Pigmenten, deren Ausgangssubstanzen zwischen zwei Folienunterlagen hergestellt wurden

Die Orientierung cholesterischer flüssigkristalliner Moleküle läßt sich verbessern, wenn sie statt auf einer Folienunterlage zwischen zwei Folien orientiert und vernetzt werden. Dazu wurden Pigmente analog dem in Beispiel 1 B beschriebenen Verfahren hergestellt mit dem Unterschied, daß das flüssigkristalline Material zwischen zwei Polyethylenterephthalatfolien orientiert wurde. Die übrigen Verfahrensparameter, wie z.B. Schichtdicke und Laufgeschwindigkeit, entsprachen Beispiel 1 B. Da Polyethylenterephthalat im Spektralbereich zwischen 300 und 400 nm transparent ist, ist eine UV-induzierte Vernetzung der orientierten cholesterischen Moleküle ebenso möglich wie beim beschriebenen Verfahren mit einer Folienunterlage.

### Beispiel 37

### Erfindungsgemäße Pigmente in einem wasserverdünnbaren Lacksystem

1 g der auf diese Weise hergestellten grünen Pigmente wurde in 19 g Glemadur Glanz Klarlack 572 (wasserverdünnbarer Profilholzlack auf Acrylbasis, Fa. Herberts, Münster) eingerührt und auf ein Schwarz-Weiß-Papier (Prüfkarte 2854 Byk Gardner, Geretsried) aufgestrichen. Im Vergleich zum in Beispiel 1 erzielten Farbeffekt ist der grün-blaue Farbflop bereits ohne Klarlackschicht so stark ausgeprägt wie der in Beispiel 1 mit überlackiertem Klarlack, während die Intensität dieses Farbeffektes durch Überlackierung mit pigmentfreiem Glemadur nahezu verdoppelt wird.

## Patentansprüche

1. Pigmente plättchenförmiger Struktur mit einer Dicke von 3 µm bis 10 µm und einer Korngröße mit einem Durchmesser von zwischen 500 µm und 5 µm enthaltend orientierte vernetzte Substanzen mit flüssigkristalliner Struktur mit einer chiralen Phase.

2. Pigmente nach Anspruch 1, dadurch gekennzeichnet, daß sie als orientierte dreidimensional vernetzte Substanzen mit flüssigkristalliner Struktur mit chiraler Phase Organosiloxane enthalten, bei denen die Zahl der polymerisierbaren Gruppen mindestens zwei beträgt.

3. Pigmente nach Anspruch 1, dadurch gekennzeichnet, daß sie als orientierte dreidimensional vernetzte Substanzen mit flüssigkristalliner Struktur mit chiraler Phase mindestens zwei Organosiloxane gemäß Anspruch zwei enthalten.

4. Zusammensetzungen, die Pigmente enthaltend orientierte dreidimensional vernetzte Substanzen mit flüssigkristalliner Struktur mit einer chiralen Phase gemäss Anspruch 1 umfassen.

5. Zusammensetzungen gemäß Anspruch 4, dadurch gekennzeichnet, daß sie eine oder mehrere Substanzen ausgewählt aus der Gruppe Wasserlacke, beispielsweise in Form von wässrigen Dispersionen wie PMA, SA, Polyvinyl-Derivate, PVC, Polyvinylidenchlorid, SB-Copo, PV-AC-Copo-Harze, oder in Form von wasserlöslichen Bindemitteln wie Schellack, Maleinharze, Kolophonium modifizierte Phenolharze, lineare und verzweigte gesättigte Polyester, aminoplastvernetzende gesättigte Polyester, Fettsäure mod. Alkydharze, plastifizierte Harnstoffharze oder in Form von wasserverdünnbaren Bindemitteln wie PUR-Dispersionen, EP-Harze, Harnstoffharze, Melaminharze, Phenolharze, Alkydharze, Alkydharzemulsionen, Siliconharzemulsionen, desweiteren Pulverlacke, beispielsweise Pulverlacke für TRIBO/ES wie Polyester-Beschichtungspulverharze, PUR-Beschichtungspulverharze, EP-Beschichtungspulverharze, EP/SP-Hybrid-Beschichtungspulverharze, PMA-Beschichtungspulverharze oder Pulverlacke für Wirbelsintern, wie thermoplastifiziertes EPS, LD-PE, LLD-PE, HD-PE, desweiteren lösemittelhaltige Lacke, beispielsweise als Ein- und Zweikomponenten-Lacke (Bindemittel), wie Schellack, Kolophonium-Harzester, Maleinatharze, Nitrocellulosen, Kolophoniummodifizierte Phenolharze, Physikalisch trocknende gesättigte Polyester, Aminoplastvernetzende gesättigte Polyester, Isocyanat vernetzende gesättigte Polyester, selbstvernetzende gesättigte Polyester, Alkyde mit gesättigten Fettsäuren, Leinölalkydharze, Sojaölharze, Sonnenblumenölalkydharze, Safflorölalkydharze, Ricinenalkydharze, Holzöl-/Leinölalkydharze, Mischölalkydharze, Harzmodifizierte Alkydharze, Styrol/Vinyltoluolmodifizierte Alkydharze, Acrylierte Alkydharze, Urethanmodifizierte Alkydharze, Siliconmodifizierte Alkydharze, Epoxidmodifizierte Alkydharze, Isophthalsäure-Alkydharze, Nichtplastifizierte Harnstoffharze, Plastifizierte Harnstoffharze, Melaminharze, Polyvinylacetale, nichtvernetzende P(M)A-Homo- bzw. Copolymerisate, nichtvernetzende P(M)A-Homo- bzw. Copolymerisate mit Nichtacrylmonomeren, selbstvernetzende P(M)A-Homo- bzw. Copolymerisate, P(M)A Copolymerisate mit anderen Nichtacrylmonomeren, fremdvernetzende P(M)A-Homo- bzw. Copolymerisate, fremdvernetzende P(M)A-Copolymerisate mit Nichtacrylmonomeren, Acrylat-Copolymerisationsharze, Ungesättigte Kohlenwasserstoffeharze, organisch lösliche Celluloseverbindungen, Silicon-Kombiharze, PUR-Harze, P-Harze, Peroxidhärtende ungesättigte Kunstharze, Strahlenhärtende Kunstharze photoinitiatorhaltig, Strahlenhärtende Kunstharze photoinitiatorfrei, desweiteren lösemittelfreie Lacke (Bindemittel), wie Isocyanat vernetzende gesättigte Polyester, PUR-2K-Harzsysteme, PUR-lK-Harzsysteme feuchtigkeitshärtend, EP-Harze sowie Kunststoffe - einzeln oder in Kombination - wie Acrylnitril-Butadien-Styrol-Copolymere, BS, Celluloseacetat, Celluloseacetobutyrat, Celluloseacetopropionat, Cellulosenitrat, Cellulosepropionat, Kunsthorn, Epoxidharze, Polyamid, Polycarbonat, Polyethylen, Polybutylenterephthalat, Polyethylenterephthalat, Polymethylmethacrylat, Polypropylen, Polystyrol, Polytetrafluorethylen, Polyvinylchlorid, Polyvinylidenchlorid, Polyurethan, Styrol- Acrylnitril-Copolymere, ungesättigte Polyesterharze als Granulate, Pulver, oder Gießharz enthalten.

6. Datenträger enthaltend Pigmente gemäß einem oder mehreren der Ansprüche 1 bis 3.

7. Verfahren zur Herstellung von Pigmenten nach einem oder mehreren der Ansprüche 1 bis 3, dadurch gekennzeichnet, daß dreidimensional vernetzbare Substanzen mit flüssigkristalliner Struktur mit chiraler Phase gegebenenfalls nach Zumischen weiterer Pigmente und/oder Farbstoffe orientiert werden, dreidimensional vernetzt werden und auf eine erwünschte Korngröße zerkleinert werden.

8. Verfahren zur Herstellung von Zusammensetzungen gemäß Anspruch 4 oder 5 dadurch gekennzeichnet, daß Pigmente enthaltend orientierte dreidimensional vernetzte Substanzen mit flüssigkristalliner Struktur mit einer chiralen Phase mit konventionellen etablierten Verfahrensschritten einzeln oder in beliebigen Mischungen in diese Zusammensetzungen eingearbeitet werden und dort durch Scherkräfte auslösende Methoden orientiert werden.

9. Verwendung von Pigmenten gemäß Anspruch 1 bis 3 enthaltend orientierte dreidimensional vernetzte Substanzen mit flüssigkristalliner Struktur mit einer chiralen Phase auf dem Fahrzeugsektor (Land-, Kraft-, Schienen-, Luft-, Wasserfahrzeuge, Fahrräder) samt Zubehör, im Freizeit-, Sport- und Spielsektor, im Kosmetikbereich, im Textil-, Leder- oder Schmuckbereich, im Geschenkartikelbereich, in Schreibutensilien, Emballagen, oder Brillengestängen, im Bausektor (beispielsweise Innenwände, Innenverkleidungen, Fassaden, Tapeten, Türen, Fenster), im Haushaltssektor (beispielsweise Möbel, Geschirr und Haushaltsgeräte), oder in Druckerzeugnissen aller Art wie beispielsweise Kartonagen, Verpackungen, Tragetaschen, Papiere, Etiketten oder Folien.

## Claims

1. Pigment of platelet-like structure having a thickness of from 3 µm to 10 µm and a particle size with a diameter of between 500 µm and 5 µm, comprising oriented crosslinked substances with a liquid-crystalline structure having a chiral phase.

2. Pigment according to Claim 1, characterized in that it comprises, as oriented, three-dimensionally crosslinked substances with a liquid-crystalline structure having a chiral phase, organosiloxanes in which the number of polymerizable groups is at least two.

3. Pigment according to Claim 1, characterized in that it comprises, as oriented, three-dimensionally crosslinked substances with a liquid-crystalline structure having a chiral phase, at least two organosiloxanes as claimed in Claim 2.

4. Composition comprising pigments which comprise oriented, three-dimensionally crosslinked substances with a liquid-crystalline structure having a chiral phase, in accordance with Claim 1.

5. Composition according to Claim 4, characterized in that it comprises one or more substances selected from the group consisting of waterborne coating materials, for example in the form of aqueous dispersions, such as PMA, SA, polyvinyl derivatives, PVC, polyvinylidene chloride, SB copolymers, PV-AC copolymer resins, or in the form of water-soluble binders, such as shellac, maleic resins, rosin-modified phenolic resins, linear and branched saturated polyesters, amino resin-crosslinking saturated polyesters, fatty acid-modified alkyd resins, plasticized urea resins, or in the form of water-thinnable binders such as PU dispersions, EP resins, urea resins, melamine resins, phenolic resins, alkyd resins, alkyd resin emulsions, silicone resin emulsions, and also powder coatings, for example powder coatings for triboelectric spraying, such as polyester powder coating resins, PU powder coating resins, EP powder coating resins, EP/SP hybrid powder coating resins, PMA powder coating resins or powder coatings for fluidized-bed sintering, such as thermoplasticized EPS, LDPE, LLDPE, HDPE, and furthermore solvent-containing coating materials, for example as one-component and two-component (two-pack) coating materials (binders), such as shellac, rosin esters, maleic resins, nitrocelluloses, rosin-modified phenolic resins, physically drying saturated polyesters, amino resin-crosslinking saturated polyesters, isocyanate-crosslinking saturated polyesters, autocrosslinking saturated polyesters, alkyds with saturated fatty acids, linseed oil alkyd resins, soya oil resins, sunflower oil alkyd resins, safflower oil alkyd resins, ricinenic alkyd resins, wood oil/linseed oil alkyd resins, mixed oil alkyd resins, resin-modified alkyd resins, styrene/vinyltoluene-modified alkyd resins, acrylicized alkyd resins, urethane-modified alkyd resins, silicone-modified alkyd resins, epoxide-modified alkyd resins, isophthalic acid alkyd resins, nonplasticized urea resins, plasticized urea resins, melamine resins, polyvinyl acetals, noncrosslinking P(M)A homo- and copolymers, noncrosslinking P(M)A homo- and copolymers with nonacrylic monomers, autocrosslinking P(M)A homo- and copolymers, P(M)A copolymers with other nonacrylic monomers, P(M)A homo- and copolymers which crosslink by means of external crosslinking agents, P(M)A copolymers with nonacrylic monomers and which crosslink by means of external crosslinking agents, acrylate copolymer resins, unsaturated hydrocarbon resins, cellulose compounds which are soluble in organic solvents, silicone combination resins, PU resins, P resins, peroxide-curing unsaturated synthetic resins, radiation-curing synthetic resins containing photoinitiator, radiation-curing synthetic resins without photoinitiator, and also solvent-free coating materials (binders), such as isocyanate-crosslinking saturated polyesters, PU 2-pack resin systems, moisture-curing PU 1-component resin systems, EP resins and plastics - individually or in combination - such as acrylonitrile-butadiene-styrene copolymers, BS, cellulose acetate, cellulose acetobutyrate, cellulose acetopropionate, cellulose nitrate, cellulose propionate, artificial horn, epoxy resins, polyamide, polycarbonate, polyethylene, polybutylene terephthalate, polyethylene terephthalate, polymethyl methacrylate, polypropylene, polystyrene, polytetrafluoroethylene, polyvinyl chloride, polyvinylidene chloride, polyurethane, styrene-acrylonitrile copolymers, and unsaturated polyester resins as granules, powders or casting resin.

6. Data carrier comprising a pigment as claimed in one or more of Claims 1 to 3.

7. Process for the preparation of a pigment as claimed in one or more of Claims 1 to 3, characterized in that three-dimensionally crosslinkable substances with a liquid-crystalline structure having a chiral phase are oriented, if desired after having admixed other pigments and/or dyes, the composition is subjected to three-dimensional crosslinking and is comminuted to the desired particle size.

8. Process for the preparation of a composition according to Claim 4 or 5, characterized in that pigments comprising oriented, three-dimensionally crosslinked substances with a liquid-crystalline structure having a chiral phase are incorporated into such a composition, individually or in any desired mixtures using conventional, established process steps, and these pigments are oriented therein by methods which exert shear forces.

9. Use of pigments according to Claims 1 to 3, comprising oriented, three-dimensionally crosslinked substances with a liquid-crystalline structure having a chiral phase in the vehicle sector (land vehicles, motor vehicles, rail vehicles, aircraft, water craft, bicycles) along with the accessories, in the leisure, sports and games sector, in the cosmetics sector, in the textile, leatherwear or jewellery sector, in the gift sector, in writing utensils, packaging or spectacle frames, in the construction sector (for example for interior walls, interior panelling, exterior facing, wall coverings, doors and windows), in the household sector (for example for furniture, crockery, pots and pans and household implements), or the pigments can also be used in printed products of all kinds, for example cardboard and other packaging, carrier bags, paper products, labels and sheets.

## Revendications

1. Pigments à structure en paillettes, ayant une épaisseur de 3 microns à 10 microns et une grosseur de grain d'un diamètre compris entre 500 microns et 5 microns, contenant des substances orientées réticulées, ayant une structure de cristaux liquides à phase chirale.

2. Pigments selon la revendication 1, caractérisés en ce qu'ils contiennent, en tant que substances orientées réticulées en trois dimensions, ayant une structure de cristaux liquides à phase chirale, des organosiloxanes, pour lesquels le nombre des groupements polymérisables est au moins de deux.

3. Pigments selon la revendication 1, caractérisés en ce qu'ils contiennent, en tant que substances orientées réticulées en trois dimensions, ayant une structure de cristaux liquides à phase chirale, au moins deux organosiloxanes selon la revendication 2.

4. Compositions qui englobent des pigments contenant des substances orientées réticulées en trois dimensions, ayant une structure de cristaux liquides à phase chirale, selon la revendication 1.

5. Compositions selon la revendication 4, caractérisées en ce qu'elles contiennent une ou plusieurs substances choisies parmi le groupe des laques aqueuses, par exemple sous la forme de dispersions aqueuses comme le PMA, le SA, des dérivés polyvinyliques, le PVC, le chlorure de polyvinylidène, des résines copolymères SB, des résines copolymères PV-AC, ou sous la forme de liants hydrosolubles comme la gomme-laque, des résines maléiques, des résines phénoliques modifiées à la colophane, des polyesters saturés linéaires et ramifiés, des polyesters saturés réticulant par voie aminoplaste, des résines alkydes modifiées aux acides gras, des résines uréiques plastifiées, ou sous la forme de liants hydrodiluables comme des dispersions PU, des résines EP, des résines uréiques, des résines de mélamine, des résines phénoliques, des résines alkydes, des émulsions de résines alkydes, des émulsions de résines de silicone, de surcroît des laques en poudre, par exemple des laques en poudre pour pulvérisation triboélectrique, comme des résines en poudre de revêtement polyester, des résines en poudre de revêtement PU, des résines en poudre de revêtement EP, des résines en poudre de revêtement hybride EP/SP, des résines en poudre de revêtement PMA ou des laques en poudre pour revêtement plastique en lit fluidisé, comme l'EPS, le LD-PE, le LLD-PE, le HD-PE thermoplastifiés, en plus des laques contenant des solvants, par exemple en tant que laques à un ou à deux composants (liants), comme la gomme-laque, des esters de résine-colophane, des résines maléiques, des nitrocelluloses, des résines phénoliques modifiées à la colophane, des polyesters saturés séchant de manière physique, des polyesters saturés réticulant par voie aminoplaste, des polyesters saturés réticulant par voie isocyanate, des polyesters saturés autoréticulants, des alkydes avec des acides gras saturés, des résines alkydes de l'huile de lin, des résines d'huile de soja, des résines alkydes d'huile de tournesol, des résines alkydes d'huile de carthame, des résines alkydes de l'huile de ricin, des résines alkydes d'huile de bois/d'huile de lin, des résines alkydes d'huiles mixtes, des résines alkydes modifiées résine, des résines alkydes modifiées styrène/vinyltoluène, des résines alkydes acrylées, des résines alkydes modifiées aux uréthanne, des résines alkydes modifiées aux silicones, des résines alkydes modifiées époxyde, des résines alkydes d'acide isophtalique, des résines d'urée non plastifiées, des résines d'urée plastifiées, des résines de mélamine, des acétals de polyvinyle, des homopolymères, respectivement des copolymères non réticulants P (M) A, des homopolymères, respectivement des copolymères non réticulants P (M) A avec des monomères non acryliques, des homopolymères, respectivement des copolymères P (M) A autoréticulants, des copolymères P (M) A avec d'autres monomères non acryliques, des homopolymères, respectivement des copolymères P (M) A à réticulation par agent externe, des copolymères P (M) A à réticulation par agent externe avec des monomères non acryliques, des résines de copolymèreion d'acrylates, des résines d'hydrocarbures non saturées, des composés cellulosiques organiquement solubles, des résines combinées aux silicones, des résines PU, des résines P, des résines synthétiques insaturées à durcissement peroxydique, des résines synthétique à durcissement par irradiation contenant des agents photoinitiateurs, des résines à durcissement par irradiation sans agents photoinitiateurs, de surcroît des laques exemptes de solvants, (liants), comme des polyesters saturés réticulant par voie isocyanate, des systèmes de résines à 2 composants PU, des systèmes de résines à 1 composant PU à durcissement à l'humidité, des résines EP ainsi que des résines synthétiques - individuellement on en combinaison - comme des copolymères acrylonitrilebutadiène-styrène, le BS, l'acétate de cellulose, l'acétobutyrate de cellulose, l'acétopropionate de cellulose, le nitrate de cellulose, le propionate de cellulose, la corne synthétique, des résines époxydes, le polyamide, le polycarbonate, le polyéthylène, le téréphtalate de polybutylène, le téréphtalate de polyéthylène, le méthacrylate de polyméthyle, le polypropylène, le polystyrène, le polytétrafluoroéthylène, le chlorure de polyvinyle, le chlorure de polyvinylidène, le polyuréthanne, des copolymères styrène-acrylonitrile, des résines de polyesters insaturées en tant que granulats, poudres ou résines de coulée.

6. Support de données comprenant des pigments selon une ou plusieurs des revendications 1 à 3.

7. Procédé de fabrication de pigments selon une ou plusieurs des revendications 1 à 3, caractérisé en ce que des substances réticulables en trois dimensions, ayant une structure de cristaux liquides à phase chirale, le cas échéant, après le mélange de pigments supplémentaires et/ou de colorants, sont orientées, sont réticulées en trois dimensions et sont broyées à une grandeur de grain souhaitée.

8. Procédé de fabrication de compositions selon la revendication 4 ou 5, caractérisé en ce que les pigments comprenant des substances orientées réticulées en trois dimensions, ayant une structure de cristaux liquides à phase chirale sont incorporés, individuellement ou en mélanges quelconques, dans ces compositions, à l'aide d'étapes de procédés établies classiques, et y sont orientés grâce à des méthodes libérant des forces de cisaillement.

9. Utilisation de pigments selon les revendications 1 à 3, comprenant des substances orientées réticulées en trois dimensions, ayant une structure de cristaux liquides à phase chirale, dans le secteur des véhicules (véhicules terrestres, véhicules poids lourds, véhicules ferroviaires, véhicules aériens, véhicules nautiques, bicyclettes) y compris accessoires, dans le secteur des loisirs, du sport et des jeux, dans le domaine cosmétique, dans le domaine des textiles, du cuir ou de la bijouterie, dans le domaine des cadeaux, dans les articles pour écrire, les emballages, ou les montures de lunettes, dans le secteur de la construction (par exemple pour les parois internes, les habillages internes, les façades, les papiers-peints, les portes, les fenêtres), dans le secteur ménager (par exemple les meubles, la vaisselle et les appareils ménagers) ou dans les produits d'imprimerie de toutes sortes comme par exemple les cartonnages, les empaquetages, les sacs à provision, les papiers, les étiquettes ou les pellicules.
